# EUROPÄISCHE PATENTSCHRIFT

(11) **EP 2 004 391 B1**
(45) Veröffentlichungstag und Bekanntmachung des Hinweises auf die Patenterteilung: **06.10.2010**
(21) Anmeldenummer: 07711585.5
(22) Anmeldetag: 20.02.2007
(51) Int. Cl.: B29D 30/16, B29D 30/30, B29D 30/60, B60C 19/08

(54) **VERFAHREN ZUR HERSTELLUNG EINER LAUFFLÄCHE FÜR EINEN FAHRZEUGREIFEN UND VORRICHTUNG ZUR DURCHFÜHRUNG DES VERFAHRENS**
METHOD FOR PRODUCING A TREAD FOR A VEHICLE TYRE AND APPARATUS FOR CARRYING OUT THE METOD
PROCÉDÉ DE FABRICATION D'UNE BANDE DE ROULEMENT POUR UN PNEUMATIQUE DE VÉHICULE ET DISPOSITIF POUR LA MISE EN OEUVRE DU PROCÉDÉ

(30) Priorität: 05.04.2006 DE 102006015910
(43) Veröffentlichungstag der Anmeldung: 24.12.2008
(73) Patentinhaber: Continental Reifen Deutschland GmbH, 30165 Hannover (DE)
(72) Erfinder: FRERICHS, Udo, 30855 Langenhagen (DE)
(74) Vertreter: Finger, Karsten
(86) Internationale Anmeldenummer: PCT/EP2007/001429
(87) Internationale Veröffentlichungsnummer: WO 2007/112809

(56) Entgegenhaltungen:
- EP-A1- 0 798 142
- EP-A1- 0 838 353
- WO-A-2005/108048
- JP-A- 2003 326 614

## Beschreibung

Die Erfindung betrifft ein Verfahren zur Herstellung einer Lauffläche für einen Fahrzeugreifen - insbesondere eines Fahrzeugluftreifens - , die mit einer elektrisch leitenden Schicht versehen ist, die axial innerhalb eines Teilabschnitts einer ersten radial äußeren Gummischicht der Lauffläche angeordnet ist, die aus einem ersten Gummimaterial ausgebildet ist, wobei sich die elektrisch leitfähige Schicht von einer zweiten, radial inneren Gummischicht der Lauffläche aus einem zweiten Gummimaterial an der radialen Innenseite des Laufflächengummimaterials bis zu einer Bodenkontaktfläche der Lauffläche erstreckt, wobei sowohl das Gummimaterial der elektrisch leitenden Schicht als auch das Gummimaterial der zweiten radial inneren Gummischicht der Lauffläche eine höhere elektrische Leitfähigkeit aufweisen als das Gummimaterial der ersten radial äußeren Gummischicht.

Ein Verfahren zur Herstellung eines derartigen Fahrzeugluftreifens ist beispielsweise aus der EP 1 175 992 B1 bekannt. Bei diesem Verfahren wird eine elektrisch leitfähige Schicht axial innerhalb eines Teilabschnitts einer ersten aus einer Cap-Mischung ausgebildeten radial äußeren Gummischicht ausgebildet, wobei sich die elektrisch leitfähige Schicht ausgehend von der radial innerhalb der äußeren Gummischicht ausgebildeten zweiten Gummischicht, die aus einer Base-Mischung ausgebildet ist, als im Querschnitt schmaler Steg nach radial außen bis zur Bodenkontaktfläche der Lauffläche erstreckt. Die den schmalen Steg bildende Schicht, wird dadurch erzeugt, dass ein schmaler bandförmiger Kautschukstreifen um die zweite Kautschukschicht in mehreren radial übereinander angeordneten Windungen aufgewickelt wird. Die deckungsgleich aufeinander liegenden Windungen des bandförmigen Kautschukstreifens sind jeweils mit gleicher axialer Breite ausgebildet. Anschließend wird das Kautschukmaterial zur Bildung der ersten Gummischicht nacheinander beiderseits des Steges aufgebaut, wobei eine sichere Verbindung zwischen Steg und Kautschukmaterial zur Bildung der ersten Gummischicht ohne Bildung von Lufteinschlüssen mit erzeugt werden muss. Hierzu sind ausreichend hohe Presskräfte erforderlich. Damit der Steg hierbei nicht unzulässig aus seiner Position kippen kann muss das Kautschukband möglichst breit ausgebildet werden. Eine breite Ausbildung reduziert jedoch die für die Fahreigenschaften wichtige Kontaktfläche der ersten aus der Cap-Mischung ausgebildeten Gummischicht des Fahrzeugreifens zur Fahrbahnoberfläche.

Aus der EP 0 798 142 A1 sowie aus der EP 0 838 353 A1 ist jeweils ein Fahrzeugluftreifen bekannt, bei dem der Laufstreifen aus einer Cap- und aus einer Base-Mischung ausgebildet ist, wobei die Base-Mischung eine höhere elektrische Leitfähigkeit aufweist. Ein Steg mit ebenfalls höherer Leitfähigkeit erstreckt sich ausgehend von der Base nach radial außen durch die Cap hindurch bis zur Straßenkontaktobeffläche.

Aus der WO 2005/108048 A1 und aus der JP 2003 326614 A ist es ebenfalls bekannt, innerhalb der Lauffläche einen axialen Erstreckungsabschnitt einer Gummimischung auszubilden, der sich mit erhöhter elektrische Leitfähigkeit von radial innen nach radial außen bis zur Bodenkontaktoberfläche erstreckt.

Der Erfindung liegt daher die Aufgabe zugrunde, eine einfache sichere Herstellung einer Lauffläche für einen Fahrzeugreifen - insbesondere eines Fahrzeugluftreifens-, die mit einer elektrisch leitenden Schicht versehen ist, die axial innerhalb eines Teilabschnitts einer ersten radial äußeren Gummischicht der Lauffläche angeordnet ist, die aus einem ersten Gummimaterial ausgebildet ist, wobei sich die elektrisch leitfähige Schicht von einer zweiten, radial inneren Gummischicht der Lauffläche aus einem zweiten Gummimaterial an der radialen Innenseite des Laufflächengummimaterials bis zu einer Bodenkontaktfläche der Lauffläche erstreckt, wobei sowohl das Gummimaterial der elektrisch leitenden Schicht als auch das Gummimaterial der zweiten radial innere Gummischicht der Lauffläche eine höhere elektrische Leitfähigkeit aufweisen als das Gummimaterial der ersten radial äußeren Gummischicht, zu ermöglichen, bei der trotz guter elektrischer Ableitfähigkeit aus der zweiten Gummischicht in die Fahrbahnoberfläche die Fahreigenschaften optimiert ausgelegt werden können.

Erfindungsgemäß wird die Aufgabe durch das Verfahren zur Herstellung einer Lauffläche für einen Fahrzeugreifen - insbesondere eines Fahrzeugluftreifens-, die mit einer elektrisch leitenden Schicht versehen ist, die axial innerhalb eines Teilabschnitts einer ersten radial äußeren Gummischicht der Lauffläche angeordnet ist, die aus einem ersten Gummimaterial ausgebildet ist, wobei sich die elektrisch leitfähige Schicht von einer zweiten, radial inneren Gummischicht der Lauffläche aus einem zweiten Gummimaterial an der radialen Innenseite des Laufflächengummimaterials bis zu einer Bodenkontaktfläche der Lauffläche erstreckt, wobei sowohl das Gummimaterial der elektrisch leitenden Schicht als auch das Gummimaterial der zweiten radial innere Gummischicht der Lauffläche eine höhere elektrische Leitfähigkeit aufweisen als das Gummimaterial der ersten radial äußeren Gummischicht, gemäß den Merkmalen von Anspruch 1 gelöst, das folgenden Schritte aufweist:
a) Aufbau einer über den Umfang des Fahrzeugreifens erstreckt ausgebildeten ersten Kautschukschicht mit höherer elektrischer Leitfähigkeit und Aufbau einer im axialen Erstreckungsbereich der Schicht aus Gummimaterial höherer elektrischer Leitfähigkeit, die sich bis zur Bodenkontaktfläche im fertigen Fahrzeugreifen erstrecken soll, positioniert angeordneten, über den Umfang des Fahrzeugreifens erstreckt ausgebildeten Materialanhäufung von Kautschukmaterial mit höherer elektrischer Leitfähigkeit,
b) danach Ausformung der Materialanhäufung von Kautschukmaterial mit höherer elektrischer Leitfähigkeit zu einem über den Umfang des Fahrzeugreifens erstreckten radial von der radial äußeren Oberfläche der ersten Kautschukschicht nach außen erstrecktem Steg mit in seinen Querschnittsebenen, die die Achse des Fahrzeugreifens beinhalten, mit vorgegebener Querschnittskontur,
c) danach Aufbau einer zweiten Kautschukschicht mit geringerer elektrischer Leitfähigkeit auf der radial äußeren Oberfläche der ersten Kautschukschicht, die sich axial beiderseits an den ausgeformten Steg aus Kautschukmaterial höherer Leitfähigkeit anschließt und
d) Ausformung und Vulkanisation des Laufflächenprofils.

Diese Ausbildung ermöglicht in einfacher, zuverlässiger Weise den Aufbau und das Bereitstellen von für die Ausbildung des Steges erforderlichem elektrisch leitfähigem Gummimaterial auf der ersten ebenfalls elektrisch leitfähigen Kautschukschicht und eine nach der sicheren Bereitstellung auf der ersten Kautschukschicht mögliche individuelle Formgebung der Schicht aus Gummimaterial höherer elektrischer Leitfähigkeit in Abhängigkeit von den individuellen Anforderungen der Herstellung des zu fertigenden Luftreifens. Gegen den ausgeformten Steg wird dann das Gummimaterial der zweiten Kautschukschicht aufgebaut. Dabei kann durch die Ausformung auf der ersten Kautschukschicht und vor Auflegen der zweitens Kautschukschicht der Steg individuell so ausgeformt werden, dass ein stabiler Aufbau der Laufstreifenschichten bei optimiert ausgebildeter Kontaktfläche des Reifens zur Fahrbahnoberfläche sicher gewährleistet werden kann.

Besonders vorteilhaft ist ein Verfahren gemäß den Merkmalen von Anspruch 2, bei dem die Ausformung der Materialanhäufung von Kautschukmaterial mit höherer elektrischer Leitfähigkeit zu einem über den Umfang des Fahrzeugreifens erstreckten radial von der radial äußeren Oberfläche der ersten Kautschukschicht nach außen erstrecktem Steg mit in seinen Querschnittsebenen, die die Achse des Fahrzeugreifens beinhalten, mit einer von radial innen nach radial außen - insbesondere kontinuierlich - verjüngt ausgebildeten Querschnittskontur erfolgt. Hierdurch kann eine sehr hohe Standfestigkeit des Steges gegen Verschieben und Kippen während des Aufbaus der zweiten Kautschukschicht gegen denn Steg bei sehr schmaler Kontaktfläche des Steges zur Fahrbahnoberfläche im Reifen erzielt werden.

Besonders vorteilhaft ist ein Verfahren gemäß den Merkmalen von Anspruch 3, wobei die Verjüngung des Querschnittkonturverlauf mit einer von radial innen nach radial außen degressiv zunehmenden Verjüngung erfolgt Hierdurch kann eine sehr hohe Standfestigkeit des Steges gegen Verschieben und Kippen während des Aufbaus der zweiten Kautschukschicht gegen denn Steg bei sehr schmaler Kontaktfläche des Steges zur Fahrbahnoberfläche im Reifen erzielt werden.

Besonders vorteilhaft ist ein Verfahren gemäß den Merkmalen von Anspruch 4, bei dem die Ausformung der Materialanhäufung von Kautschukmaterial mit höherer elektrischer Leitfähigkeit zu einem über den Umfang des Fahrzeugreifens erstreckten radial von der radial äußeren Oberfläche der ersten Kautschukschicht nach außen erstrecktem Steg mit wenigstens einer - insbesonder beiden jeweils von axial außen nach axial innen zur Stegmitte hin konisch erweiterter axialen Seitenfläche(n) des Stegs erfolgt.

Besonders vorteilhaft ist ein Verfahren gemäß den Merkmalen von Anspruch 5, bei dem der Aufbau der Materialanhäufung von Kautschukmaterial mit höherer elektrischer Leitfähigkeit beim Aufbau der über den Umfang des Fahrzeugreifens erstreckt ausgebildeten ersten Kautschukschicht mit höherer elektrischer Leitfähigkeit erfolgt. Dies ermöglicht eine einfache kontinuierliche Fertigung - beispielsweise durch kontinuierliches Spulen - mit wenigen Arbeitsgängen.

Besonders vorteilhaft ist ein Verfahren gemäß den Merkmalen von Anspruch 6, bei dem der Aufbau der Materialanhäufung und der Aufbau der über den Umfang des Fahrzeugreifens erstreckt ausgebildeten ersten Kautschukschicht mit dem gleichen Kautschukmaterial mit höherer elektrischer Leitfähigkeit erfolgt. Dies ermöglicht eine besonders einfache kontinuierliche Fertigung - beispielsweise durch kontinuierliches Spulen - mit wenigen Arbeitsgängen.

Besonders einfach und vorteilhaft ist ein Verfahren gemäß den Merkmalen von Anspruch 7, bei dem der Aufbau auf einem um eine Drehachse rotatorisch antreibbaren Aufbaufläche eines Aufbaukörpers erfolgt; wobei der Aufbaukörper während des Aufbaus -insbesondere gesteuert - rotatorisch angetrieben wird. Das Kautschukmaterial kann hierdurch mit hoher Genauigkeit und definierter Zugspannung aufgelegt werden.

Besonders vorteilhaft ist ein Verfahren gemäß den Merkmalen von Anspruch 8, wobei der Aufbaukörper eine Aufbautrommel ist.

Besonders vorteilhaft ist ein Verfahren gemäß den Merkmalen von Anspruch 9, bei dem der Aufbaukörper ein torusförmiger Aufbaukern ist. Der aufgebaute Laufstreifen entspricht im Wesentlichen bereits der Kontur im späteren Reifens.

Besonders vorteilhaft ist ein Verfahren gemäß den Merkmalen von Anspruch 10, bei dem die Aufbaufläche im Wesentlichen zylindrisch zur Drehachse ausgebildet ist.

Besonders vorteilhaft ist ein Verfahren gemäß den Merkmalen von Anspruch 11, bei dem die Aufbaufläche torusförmig ist.

Besonders vorteilhaft ist ein Verfahren gemäß den Merkmalen von Anspruch 12, bei dem die Aufbaufläche Teil einer festen Obefläche ist.
Besonders vorteilhaft ist ein Verfahren gemäß den Merkmalen von Anspruch 13, bei dem die Aufbaufläche Teil einer elastischen Oberfläche - insbesondere eines aufgeblähten Balges - ist.

Besonders vorteilhaft ist ein Verfahren gemäß den Merkmalen von Anspruch 14, bei dem der Aufbau der ersten Kautschukschicht durch Aufwickeln eines bandförmigen Kautschukstreifens mit mehreren axial nebeneinander oder zumindest zum Teil axial überlappt angeordneten Windungen erfolgt. Dies ermöglicht durch sicheren Kontakt in einfacher Weise eine flächendeckende Ausbildung der ersten Kautschukschicht und bei gezielter Überlappung zusätzlich eine genaue Einstellung der Volumenverteilung des Laufstreifens längs seiner axialen Erstreckung mit wenigen Arbeitgängen bei Sicherstellung der flächendeckenden Kautschukverteilung.

Besonders vorteilhaft ist ein Verfahren gemäß den Merkmalen von Anspruch 15, bei dem der Aufbau der zweiten Kautschukschicht mit geringerer elektrischer Leitfähigkeit durch Aufwickeln eines bandförmigen Kautschukstreifens mit mehreren axial nebeneinander oder zumindest zum Teil axial überlappt angeordneten Windungen erfolgt. Dies ermöglicht durch sicheren Kontakt in einfacher Weise eine flächendeckende Ausbildung der zweiten Kautschukschicht und bei gezielter Überlappung zusätzlich eine genaue Einstellung der Volumenverteilung des Laufstreifens längs seiner axialen Erstreckung mit wenigen Arbeitgängen bei Sicherstellung der flächendeckenden Kautschukverteilung.

Besonders vorteilhaft ist ein Verfahren gemäß den Merkmalen von Anspruch 16, bei dem der Aufbau der Materialanhäufung durch Aufwickeln eines bandförmigen Kautschukstreifens mit mehreren Windungen erfolgt. Dies ermöglicht eine genaue Einstellung der Volumenverteilung der Materialanhäufung mit nur einem Arbeitgang. Darüber hinaus ermöglicht es eine Vorkonturierung der Materialanhäufung.

Besonders vorteilhaft ist ein Verfahren gemäß den Merkmalen von Anspruch 17, bei dem die erste Kautschukschicht mit elektrisch erhöhter Leitfähigkeit radial außerhalb einer - insbesondere torusförmig - aufgebauten Karkassenlage - insbesondere radialer Bauart - aufgebaut wird.

Besonders vorteilhaft ist ein Verfahren gemäß den Merkmalen von Anspruch 18, bei dem die erste Kautschukschicht mit elektrisch erhöhter Leitfähigkeit radial außerhalb einer radial außerhalb einer - insbesondere torusförmig - aufgebauten Karkassenlage aufgebauten Gürtellage - insbesondere eines Gürtellagenverbandes aus einer oder mehreren Gürtellagen und einer Gürtelbandage - aufgebaut wird.

Besonders vorteilhaft ist ein Verfahren gemäß den Merkmalen von Anspruch 19, bei dem der zur Ausformung der Materialanhäufung ein - insbesondere konturierter - Ausformkörper seitlich an die jeweils auszuformende Flanke der Materialanhäufung herangeführt wird und diese dabei soweit deformiert bis sie die gewünschte Kontur der Flanke des auszuformenden Steges aufweist. Dies ermöglicht mit minimalem Arbeitsaufwand in einfacher Weise eine individuell gewünschte Konturierung.

Besonders vorteilhaft ist ein Verfahren gemäß den Merkmalen von Anspruch 20, bei dem der Ausformkörper ein Leitblech ist, an dem die Materialanhäufung nach dem Heranführen entlang bewegt wird. Dies ermöglicht eine einfache Gestaltung und Positonierung des Ausformkörpers.

Besonders vorteilhaft ist ein Verfahren gemäß den Merkmalen von Anspruch 21, bei dem der Ausformkörper eine Formrolle oder Formwalze ist, an der die Materialanhäufung nach dem Heranführen entlang bewegt wird. Dies ermöglicht mit minimalem Arbeitsaufwand in besonders einfacher und zuverlässiger Weise eine individuell gewünschte Konturierung. Besonders vorteilhaft ist ein Verfahren gemäß den Merkmalen von Anspruch 22, bei dem der Ausformkörper ein Formring ist, der koaxial und radial außerhalb zur ersten Kautschukschicht an die Materialanhäufung herangeführt wird und mit einem ringförmigen - insbesondere konturierten - Anschlag die Materialanhäufung über den gesamten Umfang der ersten Kautschukschicht deformiert. Dies ermöglicht in einfacher Weise eine individuell gewünschte Konturierung mit exakter Materialausrichtung über den gesamten Umfang. Dabei kann ein Zurückfedern des Kautschukmaterials der Materialanhäufung während der gesamten Drehbewegung durch die über den Umfang erstreckte axiale Stützkraft vermieden werden.

Besonders vorteilhaft ist die Ausbildung einer Vorrichtung zur Durchführung des Verfahrens gemäß den Merkmalen von Anspruch 23, mit einem um eine Drehachse drehbar gelagerten Aufbaukörper zum Aufbau von Kautschukschichten, mit einer Antriebsverbindung zur - insbesondere gesteuerten - Verdrehung des Aufbaukörpers um seine Drehachse, mit Mitteln zum - insbesondere gesteuert - positionierbaren Auflegen von Kautschukmaterial auf den Aufbaukörper, und mit Mitteln zur Ausformung von aufgebauten Materialanhäufungen von Kautschukmaterial auf dem Aufbaukörper.

Die Erfindung wird im Folgenden an Hand der in den Fig. 1 bis 10 schematisch dargestellten Ausführungsbeispiele näher erläutert. Hierin zeigen
- Fig. 1: Fahrzeugluftreifen in Querschnittsdarstellung,
- Fig. 2: Schematische Darstellung einer Station zur Bespulung eines Reifenrohlings mit streifenförmigem Kautschukmaterial mit auf einer Trommel aufgebautem Reifenrohling und einem Spulkopf,
- Fig. 3: Schematische Schnittdarstellung des Spulkopfs,
- Fig. 4: Vereinfachte schematische Darstellung des Spulkopfes mit in Fig. 3a bis Fig. 3g dargestellten Verfahrensschritten zur Erläuterung der Zufuhr und des Ablängens von Kautschukmaterial,
- Fig. 5: Darstellung des Aufspulprozesses eines Kautschukstreifens zur Erzeugung einer Reifenseitenwand und zur Erzeugung eines Laufstreifens,
- Fig. 6a: Querschnitt der aufgespulten Base eines Laufstreifens mit Materialanhäufung,
- Fig. 6b: Darstellung zur Erläuterung der Ausformung eines Steges aus der Materialanhäufung in erster Ausführung,
- Fig. 6c: Darstellung des Laufstreifens mit aufgespulter Base und Cap,
- Fig. 7: Darstellung zur Erläuterung der Ausformung eines Steges aus der Materialanhäufung in zweiter Ausführung,
- Fig. 8: Darstellung zur Erläuterung der Ausformung eines Steges aus der Materialanhäufung in dritter Ausführung,
- Fig. 9: Darstellung zur Erläuterung der Ausformung eines Steges aus der Materialanhäufung in vierter Ausführung,
- Fig.10a: Querschnittsdarstellung eines auf einem expandierten Bombierbalg aufgebauten Reifenrohlings zur Erläuterung der Aufbau des Laufstreifens,
- Fig.10b: Querschnittsdarstellung eines auf einem torusförmigen Kern aufgebauten Reifenrohlings zur Erläuterung der Aufbau des Laufstreifens,
- Fig.10c: Querschnittsdarstellung eines auf einer im Wesentlichen zylindrischen Aufbautrommel aufgebauten Gürtelpakets zur Erläuterung des Aufbaus des Laufstreifens.

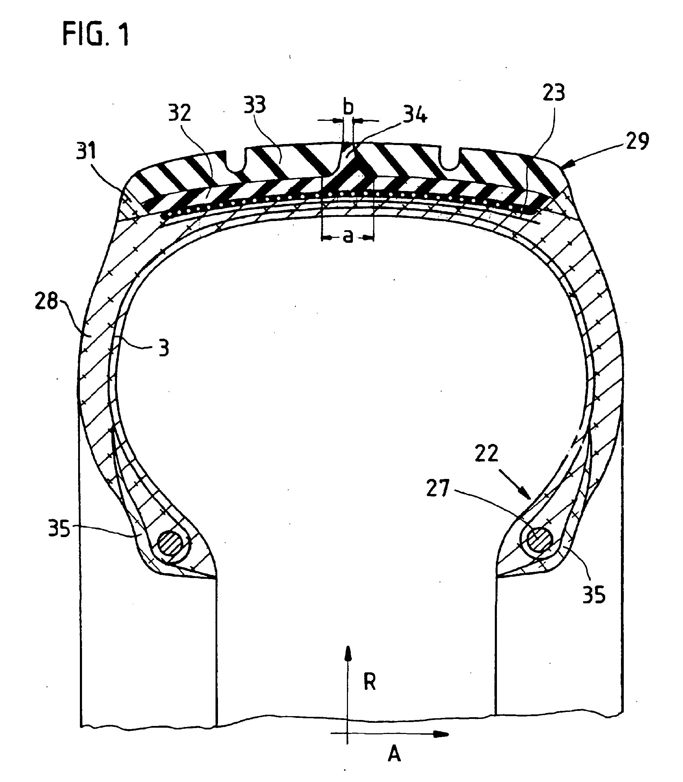

In Fig. 1 ist der Aufbau eines Fahrzeugluftreifens beispielhaft dargestellt, bei dem in einem zur Befestigung des Fahrzeugluftreifens auf einer Felge ausgebildeten rechten Wulstbereich 22 um einen Wulstkern 27 mit nicht näher dargestelltem Kernprofil eine erste Karkassenlage einer Karkasse 3 radialer Bauart außerhalb einer luftundurchlässigen Innenschicht über den rechten Schulterbereich und die Zenitebene zu dem linken Schulterbereich und den im linken Wulstbereich 22 ausgebildeten Wulstkern 27 mit Kemprofil reicht, um den sie in herkömmlicher Weise gelegt ist. Über der ersten Karkassenlage ist in herkömmlicher Weise eine zweite Karkassenlage der Karkasse 3 gelegt, die sich ebenfalls von der in Fig.1 rechts dargestellten Seite des Reifens bis zur links dargestellten Seite erstreckt. In herkömmlicher Weise ist im Wulstbereich 22 ein nicht näher dargestellte Wulststreifen bekannter Art, ein nicht näher dargestellten Wulstverstärker bekannter Art und ein Hornprofil 35 ausgebildet und von dem Hornprofil 35 ausgehend bis in den Schulterbereich reichend ein Seitenwandgummimaterial 28 aufgelegt. Über den Umfang des Reifens reichen außerhalb der Karkassenlagen radialer Bauart angeordnet mehrere Gürtellagen eines Gürtels 23 mit in Kautschuk eingebetteten Stahlkorden. Auf den Gürtellagen des Gürtels 23, zwischen den Gürtellagen 23 und dem Laufstreifen 29 ist zusätzlich eine nicht dargestellte Bandagelage bekannter Art des Gürtels 23 mit in Umfangsrichtung ausgerichteten Festigkeitsträgern ausgebildet. Im Schulterstreifen sind in bekannter Weise zusätzlich Schulterstreifen 31 aufgelegt. Den Abschluss des Reifenaufbaus bildet in bekannter Weise ein profilierter Laufstreifen 29.

Der Laufstreifen 29 ist in bekannter Weise aus einer radial äußeren Gummilage (Cap) 33 und einer radial inneren Gummilage (Base) 32 aufgebaut.

Die Lagendicke der radial inneren Gummilage (Base) 32 beträgt wenigstens 0,6 mm, beispielsweise beträgt sie 2 bis 3 mm.

Die radial äußere Gummilage (Cap) 33 ist in bekannter Weise mit einer für eine Cap geeignete Laufstreifenmischung mit hohem Anteil an Silica (Kieselerde) und somit mit relativ geringer elektrischer Leitfähigkeit ausgebildet. Die radial innere Gummilage (Base) 32 ist in bekannter Weise mit einer für eine Base geeignete Laufstreifenmischung mit hohem Anteil an Ruß und somit mit gegenüber der für die Cap verwendeten Laufstreifenmischung relativ hoher elektrischer Leitfähigkeit ausgebildet.

Wie in Fig. 1 dargestellt ist, ist zur Reduzierung der Gefahren von elektrostatischen Aufladungen, die beim Fahren auftreten können, ein über den gesamten Umfang des Fahrzeugluftreifens erstreckter Steg 34 der sich radial von der radial inneren Gummilage (Base) 32 durch die radial äußere Gummilage (Cap) 33 bis zur radial äußeren, die Kontaktfläche zur Straßenoberfläche bildenden Mantelfläche des Fahrzeugluftreifens erstreckt. Der Steg 34 ist aus der gleichen Laufstreifenmischung mit hohem Anteil an Ruß und somit mit gegenüber der für die Cap verwendeten Laufstreifenmischung relativ hoher elektrischer Leitfähigkeit ausgebildet, aus der die radial innere Gummilage (Base) 32 ausgebildet ist. Der Steg 34 erstreckt sich in axialer Richtung A des Fahrzeugluftreifens in seiner Schnittebene mit der radial äußeren Mantelfläche der radial inneren Gummilage

(Base) 32 über eine Erstreckungslänge a und nimmt in seiner axialen Erstreckung längs seiner radialen Erstreckung nach außen stetig ab und erreicht in der Schnittebene mit der radial äußeren, die Kontaktfläche zur Straßenoberfläche bildenden Mantelfläche des Fahrzeugluftreifens eine axiale Erstreckung über eine Erstreckungslänge b, wobei b < a.

Der Querschnitt des Steges in einer in Fig. 1 dargestellten Schnittebene, die die Achse des Fahrzeugluftreifens beinhaltet, hat in einer Ausführung einen Konturverlauf mit einem längs seiner radialen Erstreckung von radial innen nach radial außen ausgebildeten degressiv abnehmenden Verlauf des Maßes seiner axialen Erstreckung.

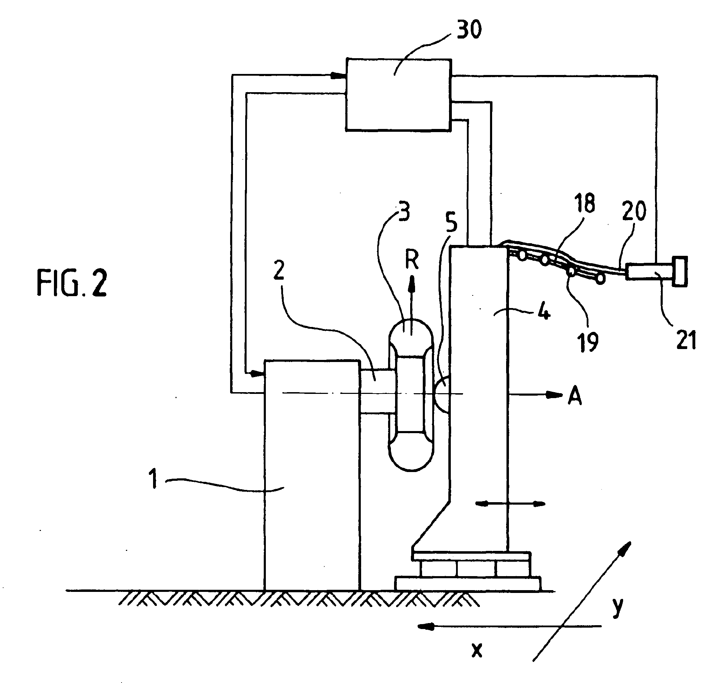

Zur Herstellung des Fahrzeugluftreifens wird ein unvulkaniserter Reifenrohling ohne Laufstreifen - wie in Fig. 2 dargestellt - auf einem in einem Gestell 1 drehbar gelagerten und über eine Steuereinheit 30 rotatorisch gesteuert angetriebenen Spannkopf 2 koaxial zum Spannkopf 2 aufgebaut und befestigt.

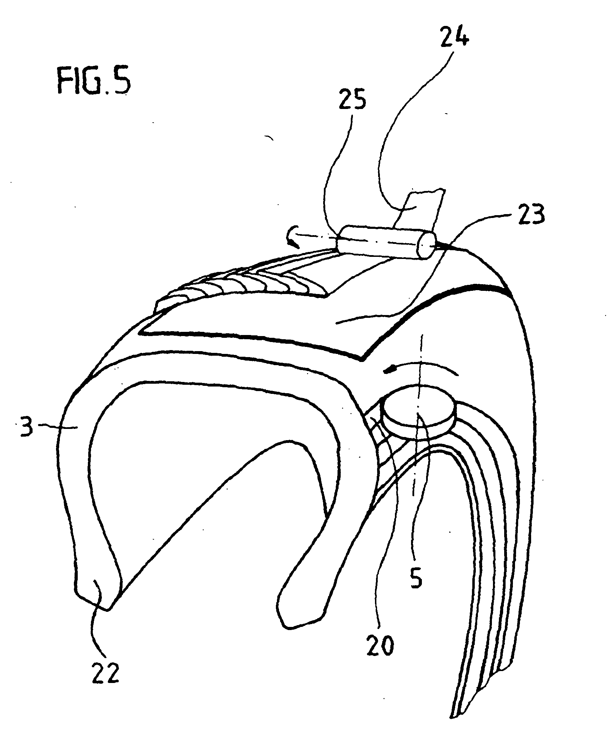

Der Reifenrohling besteht - wie in Fig. 5 dargestellt - aus der in herkömmlicher Weise ausgebildeten Karkasse 3 aus einer oder mehreren nicht dargestellten Lagen von in Kautschuk eingebetteten Festigkeitsträgern, die sich von Wulstbereich 22 zu Wulstbereich 22 des Reifenrohlings axial erstrecken und dort jeweils um den zur Vereinfachung nicht näher dargestellten Wulstkern mit darauf aufgebautem Kernreiter umgeschlagen sind. In herkömmlicher Weise ist im Wulstbereich 22 ein nicht näher dargestellte Wulststreifen bekannter Art, ein nicht näher dargestellten Wulstverstärker bekannter Art und ein in Fig. 5 zur Vereinfachung nicht dargestelltes Hornprofil ausgebildet. Über den Umfang des Reifens reichen außerhalb der Karkassenlagen radialer Bauart angeordnet ein Gürtel 23 mit mehreren in Fig. 5 zur Vereinfachung nicht dargestellte Gürtellagen und einer oder mehreren darauf aufgebaute Bandagelagen.

Der Reifenrohling ist torusförmig ausgebildet und auf dem Spannkopf 2 befestigt.

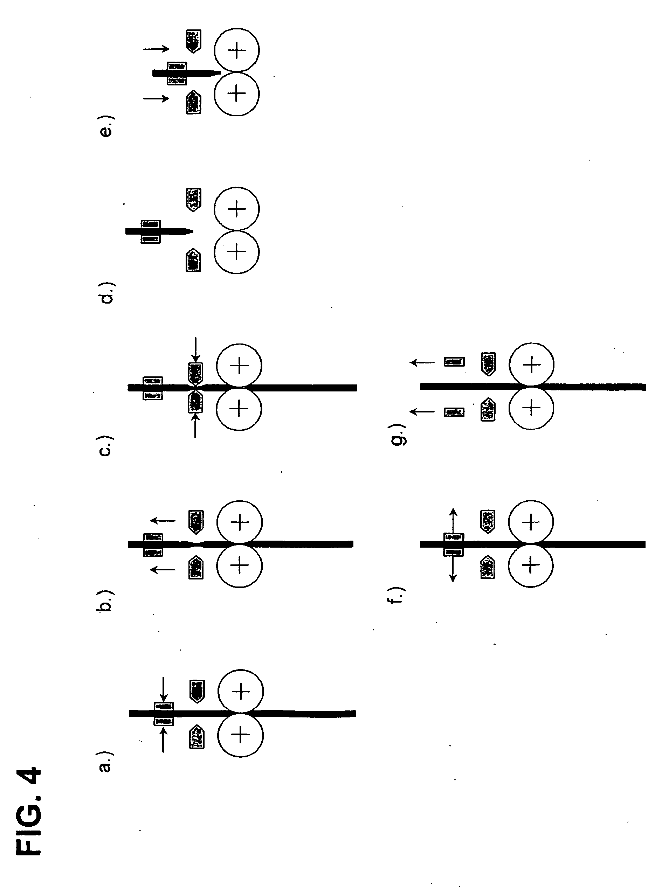

In Fig. 2 ist darüber hinaus ein Spulkopf 4 dargestellt. Zum Bespulen einer neuen Reifenseitenwand wird aus einem Extruder 21 bekannter Art rundschnurförmiges oder bandförmiges Kautschukmaterial 20 über einen am Spulkopf 4 befestigten Rollenträger mit in Förderrichtung hintereinander in einem Gestell 18 des Rollenträgers drehbar gelagerten Förderrollen 19, und im Anschluss daran zwischen zwei Halteplatten 16 und 17 hindurch, die jeweils an einem Hubkolben 14 bzw. 15 eines pneumatisch oder hydraulisch betätigbaren und von der Steuereinheit 30 gesteuert betätigten Hubkolbenzylinders in einem im Spulkopf 4 verschiebbar gelagerten Rahmen 13 befestigt sind, im Anschluss daran zwischen zwei jeweils an einem hydraulisch oder pneumatisch betätigbaren und von der Steuereinheit 30 gesteuert betätigten mit jeweils einem Hubkolbenmesser 10 bzw. 11 versehenen Hubkolben eines Hubkolbenzylinders einer Schneideeinrichtung 9 hindurch und zwischen zwei in Förderrichtung nachgeordneten zusammenwirkenden gesteuert von der Steuereinrichtung 30 rotatorisch angetriebenen Kalanderwalzen 7 und 8 eines Formkalanders 6 von den Kalanderwalzen hindurch gezogen und über Umlenkrollen bekannter Art hinweg auf eine nachgeordnete Auflegerolle 5 weiterfördert werden. Über die Auflegerolle 5 wird das von den profilierten Kalanderwalzen 6 und 7 des Formkalanders 6 ausgeformte bandförmige Material - wie in Fig. 1 und Fig. 4 zu erkennen ist - zwischen Wulstbereich 22 und Lauffläche des zu fertigenden Reifens auf die Karkasse des Reifenrohlings unter Druck aufgerollt.

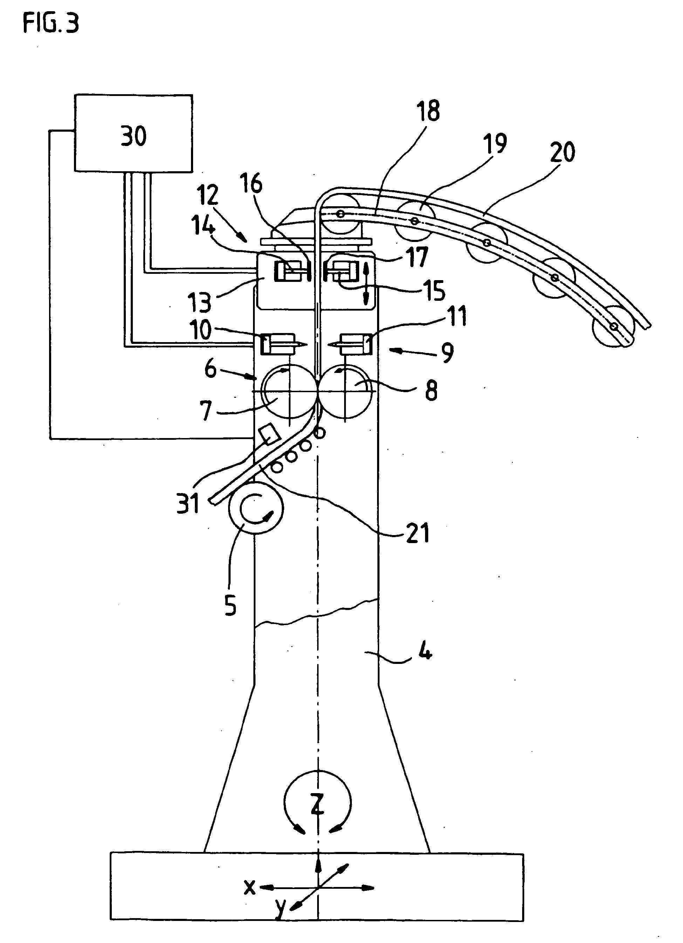

Hierzu wird zunächst der Spulkopf 4 in die parallel zur Rotationsachse des Spannkopfes 2 in den Figuren 2 und 3 dargestellte x-Richtung soweit verschoben, dass die Auflegerolle 5 in Berührkontakt mit dem Reifenrohling gerät. Durch von der Steuereinheit 30 gesteuertes, stufenloses Verschieben über eine nicht dargestellte bekannte Verschiebeeinrichtung in die Koordinatenrichtung x parallel zur Rotationsachse des Spannkopfs 2 und die Koordinatenrichtung y senkrecht zur Rotationsachse des Spannkopfs 2 kann dabei der Spulkopf 4 jeweils so positioniert werden, dass die Auflegerolle 5 mit gewünschtem Druck im Berührkontakt zum Reifenrohling 3 steht. Darüber hinaus ist - wie in Fig. 3 dargestellt ist - der Spulkopf 4 in bekannter nicht dargestellter Weise um eine senkrecht zur x-y-Ebene ausgerichtete Achse z stufenlos gesteuert schwenkbar, so dass über die Steuereinheit 30 der Spulkopf 4 jeweils so positioniert wird kann, dass die Aufliegerolle 5 jeweils mit ihrer Mantelfläche die zum Aufspulen gewünschte Ausrichtung zur Oberfläche des Reifenrohlings einnimmt.

Hierdurch wird - wie in Fig. 5 dargestellt ist - während der gesteuerten Rotation des Reifenrohlings um die Rotationsachse des Spannkopfs 2 das durch die Kalanderwalzen 7 und 8 ausgeformte Kautschukmaterial 20 von radial innen nach radial außen kontinuierlich auf die Karkasse aufgespult. Dabei können die einzelnen Windungen nebeneinander oder aber bei Bedarf auch einander überlappend ausgespult werden. Dies ist durch entsprechenden Vorschub der Bewegung des Spulkopfes 4 in der x-y-Ebene entlang der Kontur des torusförmigen Reifenrohlings möglich. Bei Bedarf wird hierzu kontinuierlich die Ausrichtung der Auflegerolle 5 zur Oberfläche der Kontur des torusförmigen Reifenrohlings durch gesteuertes Schwenken des Spulkopfs 4 um die z-Achse nach gestellt.

Bei Erfordernis wird in einer nicht dargestellten Ausführung zusätzlich die Auflegerolle 5 in z-Richtung stufenlos gesteuert verschiebbar ausgebildet ist. Bei einer derartigen Ausführung kann auch die Aufspulposition der Auflegerolle 5 gegenüber dem Reifenrohling in z-Richtung individuell gesteuert eingestellt oder während des Spulens verändert werden.

Sobald das zwischen den Hubkolbenmessern 10 und 11 hindurch gezogene rundschnurförmige oder bandförmige Kautschukmaterial eine derartige Länge erreicht hat, dass es der für die Herstellung der Seitenwand des Reifenrohlings gewünschten Aufspullänge entspricht, wird durch Steuereinheit 30 ein Schneideprozess ausgelöst. Hierzu werden die Hubkolben der Hubkolbenmesser 10 und 11 pneumatisch bzw. hydraulisch im jeweiligen Hubkolbenzylinder auf einander zu verschoben und hierdurch das rundschnurförmige bzw. bandförmige Kautschukmaterial durch die von beiden Seiten einwirkenden Hubkolbenmesser 10 und 11 zerschnitten.

Sobald das durch den Schneideprozess erzeugte Ende des abgeschnittenen Kautschukstreifens von der Auflegerolle 5 auf die Seitenwand des Reifenrohlings aufgedrückt wurde, wird der Spulkopf durch gesteuertes Verschieben in der x-y-Ebene vom Reifenrohling entfernt.

Zum Bespulen einer neuen Reifenseitenwand wird ein neuer Reifenrohling auf den Spannkopf 2 aufgespannt und der Spulkopf 4 wiederum gesteuert an den Reifenrohling soweit herangeführt, dass der Spulprozess zum Aufbau der Reifenseitenwand eingeleitet werden kann.

Zum Einführen des Anfangs eines vom Extruder neu erzeugten rundschnurförmigen oder bandförmigen Kautschukstranges zwischen die Kalanderwalzen 7 und 8 werden zunächst die Hubkolben 14 und 15 von der Steuereinheit 30 gesteuert hydraulisch bzw. pneumatisch soweit aufeinander zu bewegt, dass die parallel zum Kautschukband 20 ausgerichteten Halteplatten 16 bzw. 17 jeweils in Reibkontakt zum Kautschukband 20 geraten und das Kautschukband 20 zwischen sich festhalten. Danach wird von der Steuereinheit 30 gesteuert der parallel zur Förderrichtung des Kautschukbandes 20 verschiebbar im Spulkopf 4 gelagerte Rahmen 13 in Förderrichtung auf die Kalanderwalzen 7 und 8 des Formkalanders 6 zu bewegt, so dass das Kautschukbandes 20 zwischen den Kalanderwalzen 7 und 8 eingeführt und von den Kalanderwalzen 7 und 8 durch den in den Kalanderspalt zwischen den Kalanderwalzen 7 und 8 eingezogen wird. Dieser Zustand ist in Fig. 4a dargestellt. Danach wird - wie in Fig. 4f zu erkennen ist - der Kontakt zwischen den Halteplatten 16 und 17 zum Kautschukstreifen durch hydraulisches Betätigen der Hubkolben 14 und 15 senkrecht zur Förderrichtung des Kautschukbandes 20 weg vom Kautschukmaterial wiederum gelöst. Danach wird - wie in Fig.4g dargestellt ist - der Rahmen 13 wiederum in seine Ausgangsposition angehoben.

Zum Schneiden werden zunächst die Hubkolben 14 und 15 von der Steuereinheit 30 gesteuert hydraulisch bzw. pneumatisch soweit aufeinander zu bewegt, dass die parallel zum Kautschukband 20 ausgerichteten Halteplatten 16 bzw. 17 jeweils in Reibkontakt zum Kautschukband 20 geraten und das Kautschukband 20 zwischen sich festhalten. Danach wird von der Steuereinheit 30 gesteuert der parallel zur Förderrichtung des Kautschukbandes 20 verschiebbar im Spulkopf 4 gelagerte Rahmen 13 in Fördergeschwindigkeit der Kalanderwalzen 7 und 8 in Förderrichtung auf die Kalanderwalzen 7 und 8 des Formkalanders 6 zu bewegt, so dass das Kautschukbandes 20 in Richtung des zwischen den Kalanderwalzen 7 und 8 gebildeten Kalanderspaltes geführt wird, wobei das Kautschukband 20 weiterhin von den Kalanderwalzen 7 und 8 durch den in den Kalanderspalt zwischen den Kalanderwalzen 7 und 8 eingezogen wird. Dieser Zustand ist in Fig. 4a dargestellt. Danach wird der Rahmen 13 wieder in Gegenförderrichtung gesteuert zurückbewegt. Das zwischen den Halteplatten 16 und 17 und zwischen den Kalanderwalzen 7 und 8 jeweils eingespannte Kautschukband 20 wird hierdurch zwischen den beiden Einspannpositionen gedehnt. Hierdurch entsteht eine Einschnürung des Kautschukbandes 20. Die Position der Hubkolbenmesser 10 und 11 im Spulkopf 4 ist dabei so gewählt, dass diese im Bereich des erwarteten dünnsten Querschnitts des gedehnten Materials positioniert sind. Dies ist in Fig. 4b dargestellt. Danach werden - wie in Fig. 4c zu erkennen ist - die Hubkolbenmesser 10 und 11 hydraulisch bzw. pneumatisch gesteuert aufeinander zu bewegt, so dass das Kautschukband 20 im Bereich des dünnsten Querschnitts durchtrennt wird. Das Ende des vorangegangenen Streifenmaterials wird weiter zum Reifenrohling gefördert. Wie in Fig.4d zu erkennen ist, ist auch der Anfang des nächsten Streifenmaterials verjüngt ausgebildet und wird - wie in Fig. 4e zu erkennen ist - durch Verschieben des Rahmens 13 in Förderrichtung in den Kalanderspalt zwischen die Kalanderwalzen 7 bzw. 8 eingeführt. Danach wird - wie in Fig. 4f zu erkennen ist - der Kontakt zwischen den Halteplatten 16 und 17 zum Kautschukstreifen durch hydraulisches Betätigen der Hubkolben 14 und 15 senkrecht zur Förderrichtung des Kautschukbandes 20 weg vom Kautschukmaterial wiederum gelöst. Danach wird - wie in Fig.4g dargestellt ist - der Rahmen 13 wiederum in seine Ausgangsposition angehoben.

Wie in den Figuren 4c zu erkennen, ist auch das Ende des vorangegangenen Streifens verjüngt ausgebildet. Die Verjüngung von Anfang und Ende des Kautschukstreifens ermöglichen beim Aufspulen auf die Oberfläche des Reifenrohlings am Anfang und am Ende einen gleichmäßigen Übergang zur Oberfläche des Reifenrohlings.

Zur Ermittlung der Länge des Kautschukstreifenmaterials zur richtigen Ablängung auf die aufzuspulende Länge wird in einer Ausführung die Länge aus den vorhandenen Daten über Fördergeschwindigkeit, die beispielsweise aus der Drehgeschwindigkeit der Kalanderwalzen 7 und 8 ermittelt wird oder direkt gemessen wird, und der Förderzeit ermittelt. In einer alternativen Ausführung wird - wie in Fig. 2 dargestellt - die Länge des geförderten Kautschukbandmaterials mittels im Spulkopf ausgebildeten Sensoren 31 zur Ermittlung eines Kautschukbandes bekannter Art gemessen und diese Daten an die Steuereinheit zur Verarbeitung weitergeleitet. Die Sensoren sind beispielsweise zwischen Schneideeinrichtung mit Hubschneidemessem 10 und 11 und dem Formkalander 6 mit den Kalanderwalzen 7 und 8 oder aber - wie in Fig. 2 dargestellt ist - in Förderrichtung dem Kalander angeordnet.

Wie in Fig. 5 dargestellt ist, werden auch die Laufstreifenkautschukmischungen zum Aufbau der radial inneren Gummilage (Base) 32 und der radial äußeren Gummilage (Cap) 33 des Laufstreifens 29 des Reifens über einen - wie oben dargestellten - Spulkopf 4 aus einem in entsprechend gleicher Weise hergestellten Kautschukstreifen über eine Auflegerolle 25 des Spulkopfs 4 aufgespult. In Fig. 5 ist dabei eine Ausführung dargestellt, bei der der Kautschukstreifen auf einen auf die Karkasse des Reifenrohlings aufgebauten Gürtel 23 bekannter Art aufgespult wird. Anstelle der radialen Bewegung entlang der Seitenwandkontur erfolgt das Auflegen mit gesteuerter axialer Bewegung längs der Kontur des Fahrzeugluftreifens im Laufstreifenbereich. Während der gesteuerten Rotation des Reifenrohlings um die Rotationsachse des Spannkopfs 2 wird das durch die Kalanderwalzen 7 und 8 ausgeformte Kautschukmaterial 20 in axialer Richtung A längs der axialen Erstreckung des Gürtels kontinuierlich auf den Gürtel 23 aufgespult. Dabei können die einzelnen Windungen nebeneinander oder aber bei Bedarf auch einander überlappend ausgespult werden. Dies ist durch entsprechenden Vorschub der Bewegung des Spulkopfes 4 in der x-y-Ebene entlang der Kontur des torusförmigen Reifenrohlings möglich. Bei Bedarf wird hierzu kontinuierlich die Ausrichtung der Auflegerolle 5 zur Oberfläche der Kontur des torusförmigen Reifenrohlings durch gesteuertes Schwenken des Spulkopfs 4 um die z-Achse nach gestellt.

Es ist möglich, unterschiedliche Dicken der Laufstreifenaufbaulagen und / oder der Seitenwand jeweils durch gesteuerte Änderung des Vorschubes des Spulkopfes entlang der zu bespulenden Reifenkontur und somit durch gezielte unterschiedliche Überlappung der einzelnen nebeneinander ausgebildeten Windungen des gespulten Streifenmaterials auszubilden.

Hierzu kann zusätzlich durch gezielte Veränderung des Ausrichtewinkels der Auflegerolle 5 bzw. der Auflegerolle 25 zur Oberfläche des Reifenrohlings die Konturierung und Dickenverteilung gesteuert beeinflusst werden.

Ebenso ist es möglich, die Laufstreifenaufbaulagen bzw. die Seitenwand aus mehreren derartigen Kautschukstreifen aufzuspulen. Dabei können diese Kautschukstreifen bei Bedarf aus unterschiedlichem Kautschukmaterial und/oder unterschiedlich ausgeformt sein. Die unterschiedliche Ausformung erfolgt beispielsweise durch geänderte Kalanderwalzen 7 des Formkalanders.

Der Schulterstreifen 31 wird in einer Ausführung zusammen mit der Seitenwand als gemeinsames Bauteil aufgespult, in einer anderen Ausführung wird der Schulterstreifen 31 im Anschluss an die Ausbildung der Seitenwand 28 und des Laufstreifens 29 als eigenständiges Bauteil aufgespult.

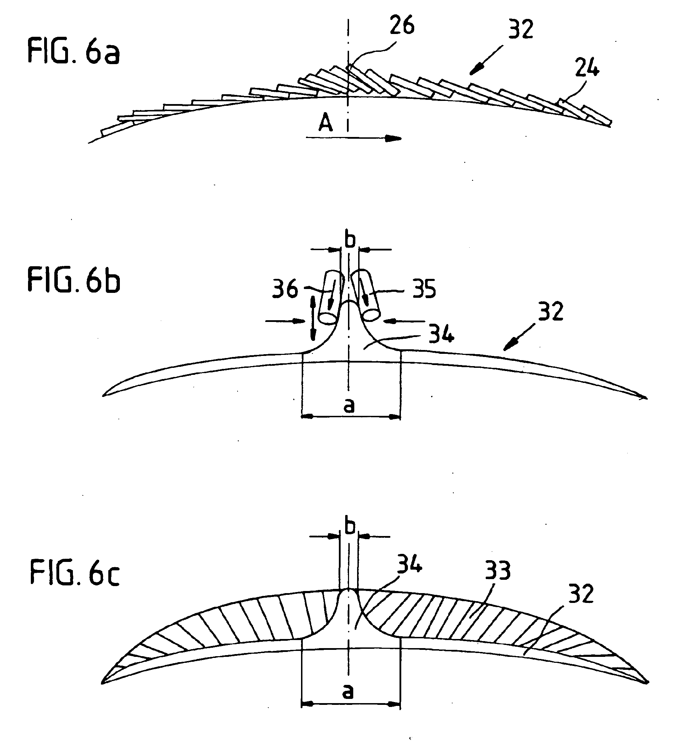

In Fig. 6a ist schematisch das Spulmuster einer in dieser Weise durch Spulen aus einem aus einer Basemischung mit hoher elektrischer Leitfähigkeit - beispielsweise mit hohem Anteil an Kieselerde - hergestellten Kautschukband 24 ausgebildeten Baselage 32 dargestellt. Die Baselage 32 wird bei diesem Ausführungsbeispiel von links nach rechts über die gesamte axiale Erstreckung der nicht dargestellten Gürtellagen unter Überlappung der einzelnen nebeneinander liegenden benachbarten Windungen des schraubenförmig um die Rohlingsachse aufgespulten Kautschukbandes 24 hergestellt. Dabei wird durch gesteuerte Verändern des Vorschubs des Spulkopfes in axialer Richtung A des Reifenrohlings im axialen Erstreckungsbereich des im Laufstreifen des fertigen Fahrzeugreifens gewünschten Steges 34 eine gegenüber den anderen axialen Erstreckungsbereichen erhöhte Wicklungsdichte des Kautschukbandes 24 und somit eine Materialanhäufung 26 ausgebildet.

Anschließend werden - wie in Fig. 6b dargestellt ist - durch zwei konturierte Rollen 35 bzw. 36, die jeweils beispielsweise an gesteuert bewegbaren nicht näher dargestellten Hebeln im Gestell 1 des Spulkopfs 4 drehbar gelagert sind oder eine geeignete separate nicht dargestellte Vorrichtung bekannter Art zugeführt werden, von beiden axialen Seiten der Materialanhäufung 26 in axialer Richtung auf die Materialanhäufung 26 zu bewegt bis sie jeweils mit der Materialanhäufung 26 in Berührkontakt kommen. Entsprechend der gewünschten Kontur des auszubildenden Steges 34 werden die Konturrollen 35 und 36 dann gesteuert weiter nach axial innen und nach radial außen bewegt und dabei um ihre Drehachse gesteuert angetrieben. Der von den angetriebenen Rollen 35 und 36 auf die Materialanhäufung 26 ausgeübte Druck bewirkt eine gezielte Verformung der Materialanhäufung 26. Durch die gesteuerte Achsbewegung in axialer und radialer Richtung des Reifenrohlings bei gleichzeitiger gesteuerter Drehbewegung des aufgebauten Reifenrohlings um seine Achse wird die Materialanhäufung über die gesamte Umfangserstreckung des Reifenrohlings in die gewünschte Querschnittskontur des auszubildenden Steges 34 verformt. Der Antrieb der Konturrollen 35 und 36 um die eigene Achse ermöglicht eine weitere gezielte Beeinflussung der Materialverteilung.

In anderer Ausführung sind die Konturrollen 35 und 36 lediglich frei drehbar gelagert und nicht selbst angetrieben ausgebildet. Hier erfolgt ihre Drehbewegung lediglich über den Reibkontakt zur Materialanhäufung 26.

Die Querschnittskontur der Konturrollen 35 und 36 ist individuell den entsprechenden Erfordernissen der gewünschten Konturierung des Steges 34 ausgebildet.

In einer besonderen Ausführung werden die Raumwinkel der Drehachsen der Konturrollen 35 und 36 zur Drehachse des Reifenrohlings ebenfalls gesteuert verändert.

Der Einfachheit halber sind in Fig. 6b nicht die Konturen der einzelnen Windungen der radial inneren Lage 32 (Base), sondern lediglich die einhüllende Außenkontur der radial inneren Lage 32 (Base) und die Querschnittskontur des durch die Konturrollen 35 und 36 ausgeformten Steges 34 dargestellt.

Der Steg 34 ist - in der in Fig. 6b dargestellten Ausbildung - in der Schnittebene mit der radial äußeren Mantelfläche der radial inneren Lage 32 (Base) mit seiner Querschnittskontur mit einer axialen Erstreckungsbreite a ausgebildet. Die Querschnittskontur des Steges 34 ist längs der radialen Erstreckung des Reifenrohlings von radial innen nach radial außen mit einer degressiv abnehmenden Erstreckungslänge ausgebildet. In der radialen Position der maximalen radial äußeren Erstreckung des Steges 34 erstreckt sich dieser in axialer Erstreckung nur noch über eine axiale Erstreckungslänge b mit b < a.

Wie in Fig. 6c zu erkennen ist, wird im Anschluss an die Ausformung des Steges 34 mittels der Konturrollen 35 und 36 die radial äußere Kautschuklage (Cap) 33 durch Aufspulen eines bandförmigen Kautschukstreifens 24 aus einer für die Cap geeigneten Kautschukmischung mit hoher elektrischer Leitfähigkeit - beispielsweise mit hohem Rußanteil - jeweils unter Überlappung der benachbarten Windungen von axial außen von der jeweiligen Reifenschulterseite nach axial innen zum Steg 34 hin schraubenförmig um die Drehachse des Reifenrohlings auf die radial innere Kautschuklage (Base) 32) aufgespult, wobei durch gesteuerte Überlappung der jeweils benachbarten Windungen die radial äußere Kontur der radial äußeren Lage (Cap) 33 des Laufstreifens erzeugt wird. Der Steg 34 ist mit seiner radial äußeren Mantelkontur in der radial äußeren Position seiner Erstreckung mit der axialen Erstreckungslänge b in gleicher radialer Position wie die beiden axial angrenzenden aufgespulten radial äußeren Erstreckungsbereiche der radial äußeren Laufstreifenlage (Cap) 33 mit ihrer radial äußeren angrenzenden Mantelkontur und bildet einen integrierten Teil der radial äußeren Mantelkontur der radial äußeren Laufstreifenlage (Cap) 33.

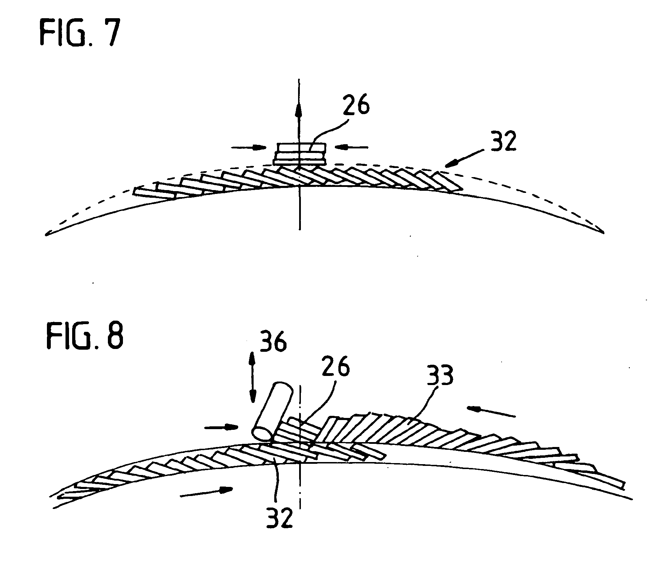

In Fig. 7 ist eine alternative Herstellung der Materialanhäufung 26 zur Ausbildung des Steges 34 dargestellt. Bei dieser Herstellung wird die radial innere Laufstreifenlage (Base) 32 in axialer Erstreckungsrichtung wie im Ausführungsbeispiel von Fig. 6a durchgehend von der einen Schulter zur anderen Schulter aus einem bandförmigen Kautschukstreifen 24 aus einer geeigneter Basemischung unter gesteuerter Überlappung der jeweils axial benachbarten Windungen aufgelegt. Im Anschluss daran wird in dem axialen Erstreckungsbereich der gewünschten Ausbildung eines Steges 34 ein bandförmiger Kautschukstreifen 24 in Form mehrerer spiralig radial übereinander aufgewickelter Windungen aufgebaut. Die Ausformung zum Steg 34 erfolgt wie zu Fig. 6b dargelegt. In Fig. 8 ist eine weitere Alternative zur Herstellung der Materialanhäufung 26 und des Steges 34 dargestellt. Hierbei wird zunächst wie am Beispiel von Fig. 7 dargestellt die radial innere Laufstreifenlage (Base) aus einem bandförmigen Kautschukstreifen 24 aus einer geeigneten Basemischung durch schraubenförmiges Spulen um die Rohlingsachse in axialer Richtung von links nach rechts über die gesamte axiale Erstreckung des Gürtels hinweg unter Überlappung der jeweils benachbarten Windungen aufgebaut. In einem zweiten Schritt wird von der rechten Seite ein bandförmiger Kautschukstreifen 24 aus einer geeigneten Capmischung von der in Fig. 8 dargestellten rechten Gürtelseite in axialer Richtung nach innen bis zur Position der gewünschten Stegausbildung unter Überlappung der jeweils benachbarten Windungen zur Ausbildung der rechten Capseite schraubenförmig um die Rohlingsachse aufgespult. Danach wird ein bandförmiger Kautschukstreifen 24 aus der Basemischung in der Position der gewünschten Stegausbildung in direktem axialen Berührkontakt zur benachbarten Wicklung der aufgebauten Seite der radial äußeren Laufstreifenlage (Cap) 33 in Form mehrerer radial übereinander angeordneter spiralig aufgewickelter Windungen auf die aufgebaute radial innere Laufstreifenlage (Base) 32 aufgebaut. Wie zu Fig. 6b beschrieben, wird dann von der von der bereits aufgespulten Seite der radial äußeren Laufstreifenlage (Cap) 33 wegweisenden axialen Seite der Materialanhäufung 26 mit einer Konturrolle 36 die Konturrolle 36 gegen die Materialanhäufung 26 gesteuert bewegt und die Materialanhäufung 26 somit durch die von der gesteuert bewegten Konturrolle 36 und der aufgebauten Seite der radial äußeren Laufstreifenlage (Cap) axial auf die Materialanhäufung 26 einwirkenden Kräfte in die gewünschte Stegkontur deformiert und der Steg 34 auf diese Weise ausgebildet. Im Anschluss daran wird auf der in Fig. 8 links dargestellten axialen Seite die radial äußere Laufstreifenlage (Cap) 33 aus dem bandförmigen Kautschukstreifen 24 aus geeigneter Capmischung von der linken Gürtelseite in axialer Richtung bis zum Steg 34 unter Überlappung der benachbarten Wicklungen schraubenförmig aufgespult.

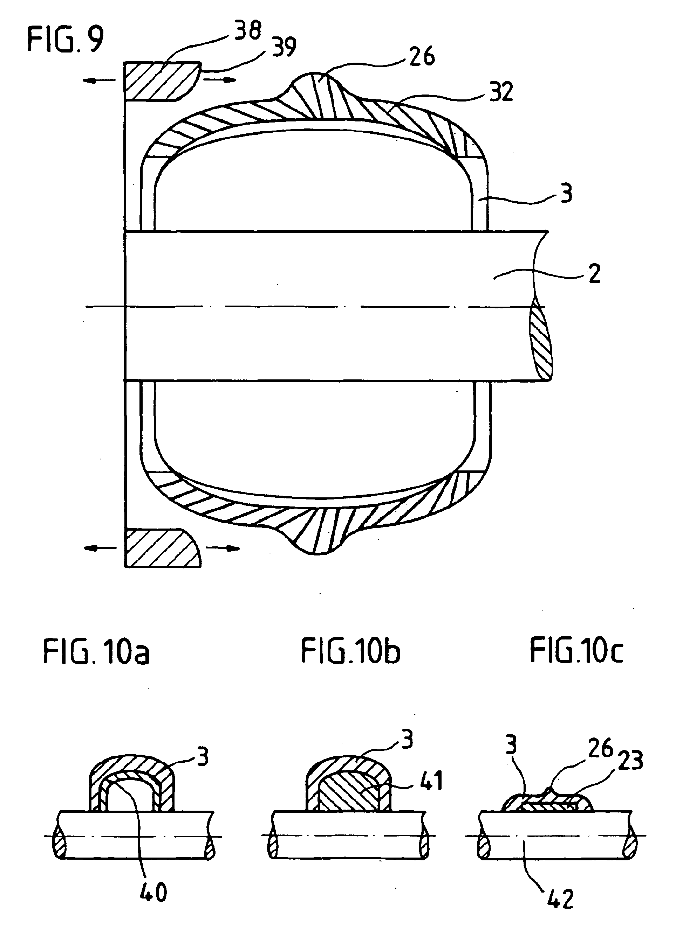

In Fig. 9 ist eine weitere Ausführung zur Ausformung eines Steges 34 aus einer - entsprechend der bereits erläuterten Ausführungen - hergestellten Anhäufung 26 der radial inneren Laufstreifenlage (Base) 32 dargestellt. Dabei wird nach Aufbau der inneren Laufstreifenlage (Base) 32 mit Materialanhäufung 26 konzentrisch zum Spannkopf 2 ein Formring 38, der an einer Stirnseite mit einer Stirnseitenkontur 39 entsprechend der Kontur einer Flanke des auszuformenden Stegs 34 ausgebildet ist, mit dieser Stirnseiten axial in Richtung der Materialanhäufung 26 bewegt. Der Konturring 38 ist in seinem Innendurchmesser dabei so ausgebildet, dass er mit radialem Spiel über die Außenkontur der aufgebauten radial inneren Laufstreifenlage (Base) 32 im axialen Erstreckungsbereich außerhalb der Materialanhäufung 26 bis an die Materialanhäufung 26 heran verschoben werden kann und dass der radiale Erstreckungsbereich der konturierten Stirnseite 39 den radialen Erstreckungsbereich des auszubildenden Steges 24 mit umfasst. Der Konturring 38 wird dabei soweit über aufgebauten radial inneren Laufstreifenlage (Base) 32 geschoben, dass die konturierte Stirnseite 39 in Berührkontakt zur Materialanhäufung 26 kommt und die Materialanhäufung 26 so weit verformt, dass sie auf der zur Stirnseite 39 weisenden axialen Seite den Konturverlauf der Flanke des auszubildenden Steges 34 erhält. Danach wird der Konturring 38 wieder axial aus dem Erstreckungsbereich der aufgebauten radial inneren Laufstreifenlage (Base) 32 entfernt. Danach wird durch einen entsprechend ausgebildeten nicht dargestellten weiteren Konturring 38, der von der anderen axialen Seite über den Reifenrohling geschoben wird, die zweite axiale Seite der Anhäufung 26 in die gewünschte Kontur der zweiten Flanke des Steges verformt.

In anderer Ausführung werden die beiden Konturringe 38 und 39 gleichzeitig von axial außen über den Reifenrohling geschoben und üben somit gleichzeitig von den beiden axialen Seiten Verformungskräfte auf die Materialanhäufung 26 aus bis der gewünschte Steg an seinen beiden Flanken die gewünschte Kontur erhält. Danach werden die beiden Ringe 38 vom Reifenrohling nach axial außen entfernt. Die radial äußere Laufstreifenlage (Cap) 33 wird - wie im Zusammenhang mit Fig. 6c beschrieben - aufgebaut.

In anderer nicht dargestellter Ausführung wird während der erste Konturring 38 in Berührkontakt zur Materialanhäufung 26 steht von der dem ersten Konturring gegenüberliegenden axialen Seite der Materialanhäufung 26 aus anstelle des zweiten Konturrings 38 eine Konturrolle 35 - wie im Zusammenhang mit Fig. 6b erläutert - an die Materialanhäufung 26 herangeführt. Somit werden gleichzeitig von den beiden axialen Seiten Verformungskräfte auf die Materialanhäufung 26 ausgeübt bis der gewünschte Steg an seinen beiden Flanken die gewünschte Kontur erhält. Danach werden der Konturringe 38 und die Konturrolle 35 vom Reifenrohling nach axial außen entfernt. Die radial äußere Laufstreifenlage (Cap) 33 wird - wie im Zusammenhang mit Fig. 6c beschrieben - aufgebaut.

In anderer nicht dargestellter Ausführung wird wie im Zusammenhang mit Fig. 7a beschrieben die radial innere Kautschuklage (Base) 32 aufgebaut. Danach wird ein Konturring 38 in die gewünschte axiale Position einer auszuformenden Stegflanke bewegt. Danach wird die Materialanhäufung 26 in axialem Berührkontakt zur konturierten Fläche 39 des Konturrings 38 aus mehreren in radialer Richtung übereinander angeordneten Windungen aufgespult. Danach wird eine Konturrolle 35 - wie im Zusammenhang mit Fig. 6b erläutert - von der dem Konturring 38 gegenüberliegenden axialen Seite der Materialanhäufung 26 aus an die Materialanhäufung 26 soweit herangeführt, dass die Materialanhäufung zwischen Konturring 38 und Konturrolle 35 ausgeformt wird. Dabei wird gleichzeitig von den beiden axialen Seiten Verformungskräfte auf die Materialanhäufung 26 ausgeübt bis der gewünschte Steg an seinen beiden Flanken die gewünschte Kontur erhält. Danach werden der Konturring 38 und die Konturrolle 35 vom Reifenrohling nach axial außen entfernt. Die radial äußere Laufstreifenlage (Cap) 33 wird - wie im Zusammenhang mit Fig. 6c beschrieben - aufgebaut.

Der auf diese Weise wie in den verschiedenen Ausführungen im Zusammenhang mit den Figuren 5 bis 8 erläuterten Ausführungen hergestellte Reifenrohling mit radial innerer Laufstreifenlage (Base) 32 und radial äußerer Laufstreifenlage (Cap) 33 mit dem durch die radial äußere Laufstreifenlage (Cap) 33 erstreckten Steg 34 wird vom Spannkopf in bekannter nicht näher dargestellter Weise entfernt und einer nicht näher dargestellten Vulkanisationspresse bekannter Art zugeführt, in der er unter Ausformung der Laufstreifenprofilierung und des Seitenwanddesigns vulkanisiert wird.

Anstelle des oben genannten Spannkopfes 2 wird der Reifenrohling zum Bespulen mit Laufstreifen und/oder Seitenwänden in alternativer Herstellung auch auf einer Reifenaufbautrommel bekannter Art aufgebaut.

Wie in Fig. 10a dargestellt, wird der Reifenrohling 3 in einer Ausführung auf einem torusförmig expandierten Balg 40 beispielsweise einem Bombierbalg zum Bespulen mit Laufstreifen und/oder Seitenwänden aufgebaut. Der Spulvorgang zum Aufbau des Laufstreifens und/oder der Seitenwände erfolgt wie in den oben genannten Ausführungsbeispielen erläutert.

Wie in Fig. 10b dargestellt, wird der Reifenrohling 3 in anderer Ausführung auf einem torusförmig ausgebildeten festen Aufbaukern 41 zum Bespulen mit Laufstreifen und/oder Seitenwand aufgebaut. Der Spulvorgang zum Aufbau des Laufstreifens und/oder der Seitenwände erfolgt wie in den oben genannten Ausführungsbeispielen erläutert.

In der in Fig. 10c dargestellten Ausführung sind auf einer Gürtelaufbautrommel 42 bekannter Art mit im Wesentlichen zylindrisch ausgebildeter radial äußerer Oberfläche die Gürtellagen eines Gürtels 23 aufgebaut. Auf den Gürtel 23 werden, in gleicher Weise wie in den Ausführungen zu Fig. 5 bis 9 erläutert, die radial innere Laufstreifenlage (Base) 32 und eine Materialanhäufung 26 schraubenförmig um die Gürtelaufbautrommel 42 aufgespult. Wie im Zusammenhang mit den Figuren 5 bis 9 ausgeführt, wird aus der Materialanhäufung 26 ein Steg 34 gewünschter Kontur ausgeformt und die radial äußere Laufstreifenlage (Cap) schraubenförmig aufgespult. Das auf diese Weise vorgefertigte Laufstreifengürtelpaket aus Gürtel 23 und Laufstreifen wird in bekannter nicht näher dargestellter Weise von der Gürtetaufbautrommel 42 entnommen und auf ein auf einer nicht dargestellten Karkassenaufbautrommel bekannter Art aus den Bestandteilen zur Ausbildung des Wulstbereichs mit Wulstkern, Kernreiter, Wulstverstärkungsstreifen und anderen gewünschten Bauteilen zum Aufbau des Wulstbereichs, der Innenschicht und der Karkassenlage aufgebauten und torusförmig ausgeformtes Karkassenpaket aufgelegt und mit diesem in bekannter Weise verbunden.

Die Seitenwände werden in einer Ausführung dabei im Rahmen der Herstellung des Karkassenpaketes auf einer flachen Karkassenaufbautrommel bekannter Art auf die Karkasse mit einem in den Erläuterungen zu den Figuren 2 bis 4 ausgebildeten Spulkopf aufgespult oder in konventioneller Weise aufgebaut.

In anderer Ausführung wird die Seitenwand nach torusförmiger Erhebung vor Vereinigung mit dem Gürtelpaket auf die Karkasse in der im Zusammenhang mit den Erläuterungen zu den Figuren 2 bis 4 beschriebenen Weise aufgespult oder in herkömmlicher Weise aufgelegt.

In anderer alternativer Ausbildung wird die Seitenwand nach Vereinigung des Laufstreifengürtelpakets mit dem torusförmig ausgeformten Karkassenpaket in der im Zusammenhang mit den Figuren 2 bis 4 erläuterten Weise aufgespult oder in herkömmlicher Weise aufgelegt.

Die eingesetzte Kautschukmischung mit hoher elektrischer Leitfähigkeit für die radial innere Laufstreifenlage (Base) 32 sowie für die Ausbildung der Materialanhäufung 26 ist beispielsweise eine Kautschukmischung, die nach der Vulkanisation einen spezifischen Widerstand von nicht mehr als 10⁶ Ω · cm bei 25° C aufweist. Die eingesetzte Kautschukmischung mit niedriger elektrischer Leitfähigkeit zur Ausbildung der radial äußeren Laufstreifenlage (Cap) 33 ist beispielsweise eine Kautschukmischung, die nach der Vulkanisation einen spezifischen Widerstand von 10⁸ Ω · cm bei 25° C aufweist.

Die axiale Position des Steges 34 ist so gewählt, dass der Steg 34 im axialen Erstreckungsbereich von radial erhabenen Profilelementen, beispielsweise von Umfangsrippen oder Profilblockreihen, des beabsichtigten Laufstreifenprofiles ausgebildet ist und beim Abrollen des Fahrzeugluftreifens in gesichertem Berührkontakt zur Straßenoberfläche steht.

In einer Ausführung wird anstelle des oben genannten einfach ausgebildeten Steges 34 in zwei oder drei unterschiedlichen axialen Positionen des Laufstreifenprofils ein derartiger Steg 34 ausgebildet.

In einer nicht dargestellten Ausführung ist die radial innere Laufstreifenlage (Base) 32 mit hoher elektrischer Leitfähigkeit aus mehreren radial übereinander angeordneten jeweils in oben genannter Spultechnik aufgebauten Lagen ausgebildet.

In anderer ebenfalls nicht dargestellter Ausführung ist die radial äußere Laufstreifenlage (Cap) 33 mit geringer elektrischer Leitfähigkeit aus mehreren radial übereinander angeordneten jeweils in oben genannter Spultechnik aufgebauten Lagen ausgebildet.

In weiterer ebenfalls nicht dargestellter Ausführung sind sowohl die radial innere Laufstreifenlage (Base) 32 mit hoher elektrischer Leitfähigkeit als auch die radial äußere Laufstreifenlage (Cap) 33 mit geringerer elektrischer Leitfähigkeit jeweils aus mehreren radial übereinander angeordneten jeweils in oben genannter Spultechnik aufgebauten Lagen aufgebaut.

Wie in den Figuren 6a und 9 zu erkennen ist, ist durch die dort verwendete Spultechnik zur Erzeugung der Materialanhäufung 26 die Materialanhäufung 26 bereits hügel- oder dreieckförmig vorkonturiert. In anderer Ausführung - wie in Fig. 7 dargestellt - die Materialanhäufung 26 mit rechteckförmiger Vorkonturierung ausgebildet.

Bei den in den Figuren 6, 7 und 9 beschriebenen und dargestellten Ausführungen wird in alternativer Ausführung während des Aufspulens der radial äußeren Laufstreifenlage (Cap) 34 von einer Reifenschulter in Richtung zum ausgeformten Steg die zur Ausformung verwendete Konturrolle 36 bzw. der Formring 38, der zur Ausformung des Steges 34 von der axial gegenüberliegenden Seite eingesetzt wurde im Berührkontakt zum Steg 34 belassen, so dass der Steg 34 während des Aufspulens der radial äußeren Kautschuklage (Cap) gegen den Steg 34 von der dieser Aufspulung gegenüberliegenden axialen Seite axial durch die Konturrolle 36 bzw. den Formring 38 gestützt wird. Danach wird die radial äußere Laufstreifenlage (Cap) 33 von der gegenüberliegenden Reifenschulter axial in Richtung Steg gespult, wobei beim Aufspulen gegen den Steg 34 dieser durch die bereits aufgespulte Seite der radial äußeren Laufstreifenlage (Cap) 33 axial gestützt wird.

Anstelle der zur Ausbildung der Konturierung in den obigen Ausführungen genannten Konturrollen 35 bzw. 36 werden in alternativer Ausführung konturierte Profilwalzen oder konturierte Leitbleche eingesetzt.

In weiterer Ausführung wird zumindest zum Aufbau der Materialanhäufung eine farbige, (gelbe, rote, grüne, blaue) Base-Kautschukmischung mit hoher elektrischer Leitfähigkeit eingesetzt. Auf diese Weise sticht der im fertigen Fahrzeugluftreifen ausgebildete Steg vom umgebenen Gummimaterial der radial äußeren Laufstreifenlage (Cap) farbig hervor.

Der Steg 34 ist in Umfangsrichtung des Fahrzeugluftreifens geradlinig ausgebildet. In anderer Ausführung kann dieser längs der Umfangserstreckung wellig ausgebildet werden. Dies ist durch gesteuerte Ausbildung der zur Ausführung des Steges 34 eingesetzten Profilwalzen, Profilrollen bzw. Leitblechen mit veränderter Andrückkraft über den Umfang des Reifenrohlings möglich.

Der Querschnitt des Steges 34 ist in seiner Grundkontur symmetrisch dreieckig und senkrecht zur inneren Laufstreifenlage (Base) 32 ausgebildet mit - wie oben dargestellt - degressiv abnehmender axialer Erstreckung in radialer Richtung von innen nach außen. Die Grundkontur ist in anderer Ausführung ein rechteckiges Parallelogramm oder pilzförmig, je nach individuell gewünschtem zu konturierendem Verlauf.

Wie in Fig. 8 dargestellt, ist in anderer Ausführung der Steg nicht senkrecht zur inneren Laufstreifenlage (Base) 32, sondern mit gezielter schräg geneigter Konturierung ausgebildet.

In weiterer Ausführung reicht der Steg nach Aufbau der Cap geringfügig radial über die radiale Erstreckung der Cap hinaus und wird mit nicht dargestellten Andrückrollen auf der radialen Außenfläche der Cap verrollt.

### Bezugszeichenliste

### (Teil der Beschreibung)

- 1: Gestell
- 2: Spannkopf
- 3: Karkasse
- 4: Spulkopf
- 5: Auflegerolle
- 6: Formkalander
- 7: Kalanderwalze
- 8: Kalanderwalze
- 9: Schneideeinrichtung
- 10: Hubkolbenmesser
- 11: Hubkolbenmesser
- 12: Zuführeinrichtung
- 13: Rahmen
- 14: Hubkolben
- 15: Hubkolben
- 16: Halteplatte
- 17: Halteplatte
- 18: Träger
- 19: Führungsrolle
- 20: Kautschukband
- 21: Extruder
- 22: Wulstbereich
- 23: Gürtellagen
- 24: Kautschukband
- 25: Auflegerolle
- 26: Materialanhäufung
- 27: Wulstkern
- 28: Seitenwand
- 29: Laufstreifen
- 30: Steuereinheit
- 31: Wing
- 32: Base
- 33: Cap
- 34: Steg
- 35: Holmprofil
- 36: Konturrolle
- 37: Konturrolle
- 38: Konturring
- 39: Konturierte Fläche
- 40: Balg
- 41: Aufbaukern
- 42: Gürtelaufbautrommel

## Patentansprüche

1. Verfahren zur Herstellung einer Lauffläche für einen Fahrzeugreifen - insbesondere eines Fahrzeugluftreifens - , die mit einer elektrisch leitenden Schicht versehen ist, die axial innerhalb eines Teilabschnitts einer ersten radial äußeren Gummischicht der Lauffläche angeordnet ist, die aus einem ersten Gummimaterial ausgebildet ist, wobei sich die elektrisch leitfähige Schicht von einer zweiten, radial inneren Gummischicht der Lauffläche aus einem zweiten Gummimaterial an der radialen Innenseite des Laufflächengummimaterials bis zu einer Bodenkontaktfläche der Lauffläche erstreckt, wobei sowohl das Gummimaterial der elektrisch leitenden Schicht als auch das Gummimaterial der zweiten radial innere Gummischicht der Lauffläche eine höhere elektrische Leitfähigkeit aufweisen als das Gummimaterial der ersten radial äußeren Gummischicht., wobei das Verfahren die folgenden Schritte aufweist:
a) Aufbau einer über den Umfang des Fahrzeugreifens erstreckt ausgebildeten ersten Kautschukschicht mit höherer elektrischer Leitfähigkeit und Aufbau einer im axialen Erstreckungsbereich der Schicht (32) aus Gummimaterial höherer elektrischer Leitfähigkeit, die sich bis zur Bodenkontaktfläche im fertigen Fahrzeugreifen erstrecken soll, positioniert angeordneten, über den Umfang des Fahrzeugreifens erstreckt ausgebildeten Materialanhäufung (26) von Kautschukmaterial mit höherer elektrischer Leitfähigkeit,
b) danach Ausformung der Materialanhäufung (26) von Kautschukmaterial mit höherer elektrischer Leitfähigkeit zu einem über den Umfang des Fahrzeugreifens erstreckten radial von der radial äußeren Oberfläche der ersten Kautschukschicht (32) nach außen erstrecktem Steg (34) mit in seinen Querschnittsebenen, die die Achse des Fahrzeugreifens beinhalten, vorgegebener Querschnittskontur,
c) danach Aufbau einer zweiten Kautschukschicht (33) mit geringerer elektrischer Leitfähigkeit auf der radial äußeren Oberfläche der ersten Kautschukschicht (32), die sich axial beiderseits an den ausgeformten Steg (34) aus Kautschukmaterial höherer Leitfähigkeit anschließt und
d) Ausformung und Vulkanisation des Laufflächenprofils.

2. Verfahren zur Herstellung einer Lauffläche für einen Fahrzeugreifen gemäß den Merkmalen von Anspruch 1, bei der die Ausformung der Materialanhäufung von Kautschukmaterial mit höherer elektrischer Leitfähigkeit zu einem über den Umfang des Fahrzeugreifens erstreckten radial von der radial äußeren Oberfläche der ersten Kautschukschicht nach außen erstrecktem Steg mit in seinen Querschnittsebenen, die die Achse des Fahrzeugreifens beinhalten, mit einer von radial innen nach radial außen - insbesondere kontinuierlich - verjüngt ausgebildeten Querschnittskontur erfolgt.

3. Verfahren zur Herstellung einer Lauffläche für einen Fahrzeugreifen gemäß den Merkmalen von Anspruch 2,
wobei die Verjüngung des Querschnittkonturverlauf mit einer von radial innen nach radial außen degressiv zunehmenden Verjüngung erfolgt.

4. Verfahren zur Herstellung einer Lauffläche für einen Fahrzeugreifen gemäß den Merkmalen von einem oder mehreren der vorangegangenen Ansprüche, bei dem die Ausformung der Materialanhäufung von Kautschukmaterial mit höherer elektrischer Leitfähigkeit zu einem über den Umfang des Fahrzeugreifens erstreckten radial von der radial äußeren Oberfläche der ersten Kautschukschicht nach außen erstrecktem Steg mit wenigstens einer - insbesondere beiden - jeweils von axial außen nach axial innen zur Stegmitte hin konisch erweiterter axialen Seitenffäche(n) des Stegs erfolgt.

5. Verfahren zur Herstellung einer Lauffläche für einen Fahrzeugreifen gemäß den Merkmalen von einem oder mehreren der vorangegangenen Ansprüche, bei der der Aufbau der Materialanhäufung von Kautschukmaterial mit höherer elektrischer Leitfähigkeit beim Aufbau der über den Umfang des Fahrzeugreifens erstreckt ausgebildeten ersten Kautschukschicht mit höherer elektrischer Leitfähigkeit erfolgt.

6. Verfahren zur Herstellung einer Lauffläche für einen Fahrzeugreifen gemäß den Merkmalen von einem oder mehreren der vorangegangenen Ansprüche,
bei der der Aufbau der Materialanhäufung und der Aufbau der über den Umfang des Fahrzeugreifens erstreckt ausgebildeten ersten Kautschukschicht mit dem gleichen Kautschukmaterial mit höherer elektrischer Leitfähigkeit erfolgt.

7. Verfahren zur Herstellung einer Lauffläche für einen Fahrzeugreifen gemäß den Merkmalen von einem oder mehreren der vorangegangenen Ansprüche,
bei der der Aufbau auf einem um eine Drehachse rotatorisch antreibbaren Aufbaufläche eines Aufbaukörpers erfolgt; wobei der Aufbaukörper während des Aufbaus -insbesondere gesteuert - rotatorisch angetrieben wird.

8. Verfahren zur Herstellung einer Lauffläche für einen Fahrzeugreifen gemäß den Merkmalen von Anspruch 7,
wobei der Aufbaukörper eine Aufbautrommel ist.

9. Verfahren zur Herstellung einer Lauffläche für einen Fahrzeugreifen gemäß den Merkmalen von Anspruch 7,
wobei der Aufbaukörper ein torusförmiger Aufbaukern ist.

10. Verfahren zur Herstellung einer Lauffläche für einen Fahrzeugreifen gemäß den Merkmalen von einem oder mehreren der Ansprüche 7 bis 9,
wobei die Aufbaufläche im Wesentlichen zylindrisch zur Drehachse ausgebildet ist.

11. Verfahren zur Herstellung einer Lauffläche für einen Fahrzeugreifen gemäß den Merkmalen von einem oder mehreren der Ansprüche 7 bis 9,
wobei die Aufbaufläche torusförmig ist.

12. Verfahren zur Herstellung einer Lauffläche für einen Fahrzeugreifen gemäß den Merkmalen von einem oder mehreren der Ansprüche 7 bis 11,
wobei die Aufbaufläche Teil einer festen Obefläche ist.

13. Verfahren zur Herstellung einer Lauffläche für einen Fahrzeugreifen gemäß den Merkmalen von einem oder mehreren der Ansprüche 7 bis 11,
wobei die Aufbaufläche Teil einer elastischen Oberfläche - insbesondere eines aufgeblähten Balges - ist.

14. Verfahren zur Herstellung einer Lauffläche für einen Fahrzeugreifen gemäß den Merkmalen von einem oder mehreren der vorangegangenen Ansprüche,
bei der der Aufbau der ersten Kautschukschicht durch Aufwickeln eines bandförmigen Kautschukstreifens mit mehreren axial nebeneinander oder zumindest zum Teil axial überlappt angeordneten Windungen erfolgt.

15. Verfahren zur Herstellung einer Lauffläche für einen Fahrzeugreifen gemäß den Merkmalen von einem oder mehreren der vorangegangenen Ansprüche,
bei der der Aufbau der zweiten Kautschukschicht mit geringerer elektrischer Leitfähigkeit durch Aufwickeln eines bandförmigen Kautschukstreifens mit mehreren axial nebeneinander oder zumindest zum Teil axial überlappt angeordneten Windungen erfolgt.

16. Verfahren zur Herstellung einer Lauffläche für einen Fahrzeugreifen gemäß den Merkmalen von einem oder mehreren der vorangegangenen Ansprüche,
bei der der Aufbau der Materialanhäufung durch Aufwickeln eines bandförmigen Kautschukstreifens mit mehreren Windungen erfolgt.

17. Verfahren zur Herstellung einer Lauffläche für einen Fahrzeugreifen gemäß den Merkmalen von einem oder mehreren der vorangegangenen Ansprüche,
wobei die erste Kautschukschicht mit elektrisch erhöhter Leitfähigkeit radial außerhalb einer - insbesondere torusförmig - aufgebauten Karkassenlage - insbesondere radialer Bauart - aufgebaut wird.

18. Verfahren zur Herstellung einer Lauffläche für einen Fahrzeugreifen gemäß den Merkmalen von einem oder mehreren der vorangegangenen Ansprüche,
wobei die erste Kautschukschicht mit elektrisch erhöhter Leitfähigkeit radial außerhalb einer radial außerhalb einer - insbesondere torusförmig - aufgebauten Karkassenlage aufgebauten Gürtellage - insbesondere eines Gürtellagenverbandes aus einer oder mehreren Gürtellagen und einer Gürtelbandage - aufgebaut wird.

19. Verfahren zur Herstellung einer Lauffläche für einen Fahrzeugreifen gemäß den Merkmalen von einem oder mehreren der vorangegangenen Ansprüche,
bei der zur Ausformung der Materialanhäufung ein - insbesondere konturierter - Ausformkörper seitlich an die jeweils auszuformende Flanke der Materialanhäufung herangeführt wird und diese dabei soweit deformiert bis sie die gewünschte Kontur der Flanke des auszuformenden Steges aufweist.

20. Verfahren zur Herstellung einer Lauffläche für einen Fahrzeugreifen gemäß den Merkmalen von Anspruch 19,
wobei der Ausformkörper ein Leitblech ist, an dem die Materialanhäufung nach dem Heranführen entlang bewegt wird.

21. Verfahren zur Herstellung einer Lauffläche für einen Fahrzeugreifen gemäß den Merkmalen von Anspruch 19,
wobei der Ausformkörper eine Formrolle oder Formwalze ist, an der die Materialanhäufung nach dem Heranführen entlang bewegt wird.

22. Verfahren zur Herstellung einer Lauffläche für einen Fahrzeugreifen gemäß den Merkmalen von Anspruch 19,
wobei der Ausformkörper ein Formring ist, der koaxial und radial außerhalb zur ersten Kautschukschicht an die Materialanhäufung herangeführt wird und mit einem ringförmigen - insbesondere konturierten - Anschlag die Materialanhäufung über den gesamten Umfang der ersten Kautschukschicht deformiert.

23. Vorrichtung zur Durchführung des Verfahrens gemäß den Merkmalen von Anspruch 1 bis 22,
mit einem um eine Drehachse drehbar gelagerten Aufbaukörper zum Aufbau von Kautschukschichten,
mit einer Antriebsverbindung zur - insbesondere gesteuerten - Verdrehung des Aufbaukörpers um seine Drehachse,
mit Mitteln zum - insbesondere gesteuert - positionierbaren Auflegen von Kautschukmaterial auf den Aufbaukörper und
mit Mitteln zur Ausformung von aufgebauten Materialanhäufungen von Kautschukmaterial auf dem Aufbaukörper.

## Claims

1. Method for producing a tread for a vehicle tyre - in particular a pneumatic vehicle tyre - which is provided with an electrically conducting layer, which is arranged axially inside a portion of a first, radially outer rubber layer of the tread that is formed from a first rubber material, wherein the electrically conductive layer extends from a second, radially inner rubber layer of the tread of a second rubber material on the radially inner side of the tread rubber material up to a ground contact surface of the tread and wherein both the rubber material of the electrically conducting layer and the rubber material of the second, radially inner rubber layer of the tread have a higher electrical conductivity than the rubber material of the first, radially outer rubber layer, wherein the method has the following steps:
a) building up of a first rubber layer of higher electrical conductivity, formed such that it extends over the circumference of the vehicle tyre, and building up of an accumulation (26) of rubber material of higher electrical conductivity, formed such that it extends over the circumference of the vehicle tyre and is arranged in a positioned manner in the region of axial extent of the layer (32) of rubber material of higher electrical conductivity that is intended to extend up to the ground contact surface in the finished vehicle tyre,
b) followed by shaping of the accumulation (26) of rubber material of higher electrical conductivity to form a web (34) which is made to extend over the circumference of the vehicle tyre, radially outward from the radially outer surface of the first rubber layer (32), and has in its cross-sectional planes that contain the axis of the vehicle tyre a predetermined cross-sectional contour,
c) followed by building up of a second rubber layer (33) of lower electrical conductivity on the radially outer surface of the first rubber layer (32), which adjoins the shaped web (34) of rubber material of higher conductivity axially on both sides, and
d) shaping and vulcanizing of the tread profile.

2. Method for producing a tread for a vehicle tyre according to the features of Claim 1, in which the forming of the accumulation of rubber material of higher electrical conductivity to form a web which is made to extend over the circumference of the vehicle tyre radially outward from the radially outer surface of the first rubber layer takes place with a cross-sectional contour formed such that it tapers from the inside outward in the radial sense - in particular continuously - in its cross-sectional planes that contain the axis of the vehicle tyre.

3. Method for producing a tread for a vehicle tyre according to the features of Claim 2, wherein the tapering of the cross-sectional contour profile takes place with a taper increasing degressively from the inside outward in the radial sense.

4. Method for producing a tread for a vehicle tyre according to the features of one or more of the preceding claims, in which method the forming of the accumulation of rubber material of higher electrical conductivity to form a web which is made to extend over the circumference of the vehicle tyre radially outward from the radially outer surface of the first rubber layer takes place with at least one - in particular both - axial side faces of the web that is or are respectively widened conically from the outside inward in the axial sense toward the middle of the web.

5. Method for producing a tread for a vehicle tyre according to the features of one or more of the preceding claims, in which the building up of the accumulation of rubber material of higher electrical conductivity takes place during the building up of the first rubber layer of higher electrical conductivity, formed such that it extends over the circumference of the vehicle tyre.

6. Method for producing a tread for a vehicle tyre according to the features of one or more of the preceding claims, in which the building up of the accumulation of material and the building up of the first rubber layer, formed such that it extends over the circumference of the vehicle tyre, takes place with the same rubber material of higher electrical conductivity.

7. Method for producing a tread for a vehicle tyre according to the features of one or more of the preceding claims, in which the building up takes place on a building surface of a building body that can be driven in a rotational manner about an axis of rotation; wherein the building body is driven in a rotational - in particular controlled - manner during the building up.

8. Method for producing a tread for a vehicle tyre according to the features of Claim 7, wherein the building body is a building drum.

9. Method for producing a tread for a vehicle tyre according to the features of Claim 7, in which the building body is a toroidal building core.

10. Method for producing a tread for a vehicle tyre according to the features of one or more of Claims 7 to 9, in which the building surface is formed substantially cylindrically in relation to the axis of rotation.

11. Method for producing a tread for a vehicle tyre according to the features of one or more of Claims 7 to 9, in which the building surface is toroidal.

12. Method for producing a tread for a vehicle tyre according to the features of one or more of Claims 7 to 11, in which the building surface is part of a solid surface.

13. Method for producing a tread for a vehicle tyre according to the features of one or more of Claims 7 to 11, in which the building surface is part of an elastic surface - in particular of an inflated bladder.

14. Method for producing a tread for a vehicle tyre according to the features of one or more of the preceding claims, in which the building up of the first rubber layer takes place by winding on a ribbon-shaped rubber strip with a number of turns arranged axially next to one another or at least partly axially overlapping.

15. Method for producing a tread for a vehicle tyre according to the features of one or more of the preceding claims, in which the building up of the second rubber layer of lower electrical conductivity takes place by winding on a ribbon-shaped rubber strip with a number of turns arranged axially next to one another or at least partly axially overlapping.

16. Method for producing a tread for a vehicle tyre according to the features of one or more of the preceding claims, in which the building up of the accumulation of material takes place by winding on a ribbon-shaped rubber strip with a number of turns.

17. Method for producing a tread for a vehicle tyre according to the features of one or more of the preceding claims, in which the first rubber layer of electrically increased conductivity is built up radially outside a built-up - in particular toroidally built-up - carcass ply, in particular of a radial type of construction.

18. Method for producing a tread for a vehicle tyre according to the features of one or more of the preceding claims, wherein the first rubber layer of electrically increased conductivity is built up radially outside a breaker belt ply built up radially outside a built-up - in particular toroidally built-up - carcass ply - in particular a breaker belt ply assembly comprising one or more breaker belt plies and a breaker belt bandage.

19. Method for producing a tread for a vehicle tyre according to the features of one or more of the preceding claims, in which, for the shaping of the accumulation of material, a shaping body - in particular a contoured shaping body - is brought up laterally to the flank of the accumulation of material that is respectively to be shaped and the latter is thereby deformed until it has the desired contour of the flank of the web to be shaped.

20. Method for producing a tread for a vehicle tyre according to the features of Claim 19, in which the shaping body is a baffle along which the accumulation of material is moved after it has been brought up to said material.

21. Method for producing a tread for a vehicle tyre according to the features of Claim 19, in which the shaping body is a forming roller or forming roll along which the accumulation of material is moved after it has been brought up to said material.

22. Method for producing a tread for a vehicle tyre according to the features of Claim 19, in which the shaping body is a forming ring which is brought up to the accumulation of material coaxially and radially outside the first rubber layer and uses an annular - particular contoured - stop to deform the accumulation of material over the entyre circumference of the first rubber layer.

23. Device for carrying out the method according to the features of Claims 1 to 22,
with a building body mounted rotatably about an axis of rotation for building up rubber layers, with a drive connection for the rotation - in particular controlled rotation - of the building body about its axis of rotation,
with means for the positionable laying - in particular in a controlled manner - of rubber material on the building body, and
with means for shaping built-up accumulations of rubber material on the building body.

## Revendications

1. Procédé de fabrication d'une bande de roulement pour un pneumatique de véhicule (notamment pour un pneumatique à air de véhicule), laquelle est munie d'une couche conductrice d'électricité, qui est disposée en direction axiale à l'intérieur d'une section d'une première couche de caoutchouc extérieure en direction radiale de la bande de roulement, qui est réalisée dans une première matière caoutchoutée, la couche conductrice d'électricité s'étendant à partir d'une deuxième couche de caoutchouc interne en direction radiale de la bande de roulement en une deuxième matière caoutchoutée, sur la face interne en direction radiale de la matière caoutchoutée de la bande de roulement jusqu'à une surface de contact avec le sol de la bande de roulement, aussi bien la matière caoutchoutée de la couche conductrice d'électricité que la matière caoutchoutée de la deuxième couche de caoutchouc, interne en direction radiale présentant une conductibilité électrique supérieure à celle de la matière caoutchoutée de la première couche de caoutchouc externe en direction radiale, le procédé comprenant les étapes suivantes :
a) confection d'une première couche de caoutchouc réalisée en extension sur la circonférence du pneumatique de véhicule à conductibilité électrique plus élevée et confection d'une accumulation (26) de matière caoutchoutée de conductibilité électrique plus élevée, réalisée en extension sur la circonférence du pneumatique de véhicule, disposée en étant positionnée dans la zone d'extension axiale de la couche (32) en matière caoutchoutée de conductibilité électrique plus élevée, laquelle est censée s'étendre jusqu'à la surface de contact avec le sol dans le pneumatique de véhicule fini,
b) ensuite conformation de l'accumulation (26) de matière caoutchoutée de conductibilité électrique plus élevée en un listel (34) s'étendant sur la circonférence du pneumatique de véhicule, étendu vers l'extérieur en direction radiale à partir de la surface extérieure en direction radiale de la première couche de caoutchouc (32) avec un contour de section transversale prédéfini dans les plans de sa section transversale qui contiennent l'axe du pneumatique de véhicule,
c) ensuite, confection sur la surface extérieure en direction radiale de la première couche de caoutchouc (32) d'une deuxième couche en caoutchouc (33) de plus faible conductibilité électrique qui se raccorde en direction axiale des deux côtés sur le listel (34) conformé en matière caoutchoutée de conductibilité électrique plus élevée et
d) conformation et vulcanisation du profil de la bande de roulement.

2. Procédé de fabrication d'une bande de roulement pour un pneumatique de véhicule selon les attributs de la revendication 1, lors duquel la conformation de l'accumulation de matière caoutchoutée à conductibilité électrique plus élevée en un listel étendu vers l'extérieur en direction radiale sur la circonférence du pneumatique de véhicule, à partir de la surface extérieure en direction radiale de la première couche de caoutchouc avec dans les plans de sa section transversale qui contiennent l'axe du pneumatique de véhicule s'effectue avec un contour de section transversale se rétrécissant (notamment en continu) de l'intérieur en direction radiale vers l'extérieur en direction radiale.

3. Procédé de fabrication d'une bande de roulement pour un pneumatique de véhicule selon les attributs de la revendication 2, le rétrécissement du tracé de contour de section transversale s'effectuant avec un rétrécissement s'accroissant de façon dégressive de l'intérieur en direction radiale vers l'extérieur en direction radiale.

4. Procédé de fabrication d'une bande de roulement pour un pneumatique de véhicule selon les attributs de l'une ou de plusieurs des revendications précédentes, lors duquel la conformation de l'accumulation de matière caoutchoutée à conductibilité électrique plus élevée en un listel étendu sur la circonférence du pneumatique de véhicule, s'étendant vers l'extérieur en direction radiale à partir de la surface extérieure en direction radiale de la première couche de caoutchouc s'effectue avec au moins une (notamment avec les deux) surface(s) latérale(s) du listel s'élargissant chacune à partir de l'extérieur en direction axiale, vers l'intérieur en direction axiale sous forme conique vers le centre du listel.

5. Procédé de fabrication d'une bande de roulement pour un pneumatique de véhicule selon les attributs de l'une ou de plusieurs des revendications précédentes, lors duquel la confection de l'accumulation de matière caoutchoutée à conductibilité électrique plus élevée s'effectue lors de la confection de la première couche de caoutchouc à conductibilité électrique plus élevée réalisée en extension sur la circonférence du pneumatique de véhicule.

6. Procédé de fabrication d'une bande de roulement pour un pneumatique de véhicule selon les attributs de l'une ou de plusieurs des revendications précédentes, lors duquel la confection de l'accumulation de matière et la confection de la première couche de caoutchouc réalisée en extension sur la circonférence du pneumatique de véhicule s'effectue avec la même matière caoutchoutée à conductibilité électrique plus élevée.

7. Procédé de fabrication d'une bande de roulement pour un pneumatique de véhicule selon les attributs de l'une ou de plusieurs des revendications précédentes, lors duquel la confection s'effectue sur une surface de confection d'un corps de confection susceptible d'être entraînée en rotation autour d'un axe de rotation, le corps de confection étant entraîné en rotation (notamment en étant commandé) pendant la confection.

8. Procédé de fabrication d'une bande de roulement pour un pneumatique de véhicule selon les attributs de la revendication 7, le corps de confection étant un tambour de confection.

9. Procédé de fabrication d'une bande de roulement pour un pneumatique de véhicule selon les attributs de la revendication 7, le corps de confection étant un noyau de confection de forme toroïdale.

10. Procédé de fabrication d'une bande de roulement pour un pneumatique de véhicule selon les attributs de l'une ou de plusieurs des revendications 7 à 9, la surface de confection étant réalisée sous forme sensiblement cylindrique par rapport à l'axe de rotation.

11. Procédé de fabrication d'une bande de roulement pour un pneumatique de véhicule selon les attributs de l'une ou de plusieurs des revendications 7 à 9, la surface de confection étant de forme toroïdale.

12. Procédé de fabrication d'une bande de roulement pour un pneumatique de véhicule selon les attributs de l'une ou de plusieurs des revendications 7 à 11, la surface de confection étant une partie d'une aire solide.

13. Procédé de fabrication d'une bande de roulement pour un pneumatique de véhicule selon les attributs de l'une ou de plusieurs des revendications 7 à 11, la surface de confection étant une partie d'une aire élastique (notamment d'un soufflet gonflé).

14. Procédé de fabrication d'une bande de roulement pour un pneumatique de véhicule selon les attributs de l'une ou de plusieurs des revendications précédentes, lors duquel la confection de la première couche de caoutchouc s'effectue par enroulement d'un ruban de caoutchouc en forme de bande en plusieurs tours disposés côte à côte en direction axiale ou en se chevauchant au moins partiellement en direction axiale.

15. Procédé de fabrication d'une bande de roulement pour un pneumatique de véhicule selon les attributs de l'une ou de plusieurs des revendications précédentes, lors duquel la confection de la deuxième couche de caoutchouc à conductibilité électrique plus faible s'effectue par enroulement d'un ruban de caoutchouc en forme de bande en plusieurs tours disposés côte à côte en direction axiale ou en se chevauchant au moins partiellement en direction axiale.

16. Procédé de fabrication d'une bande de roulement pour un pneumatique de véhicule selon les attributs de l'une ou de plusieurs des revendications précédentes, lors duquel la confection de l'accumulation de matière s'effectue par enroulement d'un ruban de caoutchouc en forme de bande en plusieurs tours.

17. Procédé de fabrication d'une bande de roulement pour un pneumatique de véhicule selon les attributs de l'une ou de plusieurs des revendications précédentes, lors duquel on confectionne la première couche de caoutchouc avec conductibilité électrique élevée à l'extérieur en direction radiale d'une couche de carcasse confectionnée (notamment sous forme toroïdale), notamment de structure radiale.

18. Procédé de fabrication d'une bande de roulement pour un pneumatique de véhicule selon les attributs de l'une ou de plusieurs des revendications précédentes, lors duquel on confectionne la première couche de caoutchouc avec conductibilité électrique élevée à l'extérieur en direction radiale d'une couche de ceinture confectionnée à l'extérieur en direction radiale d'une couche de carcasse confectionnée (notamment sous forme toroïdale), notamment d'une liaison de couches de ceinture constituée d'une ou de plusieurs couches de ceinture et d'un bandage de ceinture.

19. Procédé de fabrication d'une bande de roulement pour un pneumatique de véhicule selon les attributs de l'une ou de plusieurs des revendications précédentes, lors duquel pour la conformation de l'accumulation de matière, on ramène un corps de conformation (notamment contouré) latéralement vers le flanc à conformer de l'accumulation de matière et en ce qu'on déforme ensuite ce dernier jusqu'à ce qu'il présente le contour souhaité du flanc du listel à conformer.

20. Procédé de fabrication d'une bande de roulement pour un pneumatique de véhicule selon les attributs de la revendication 19, le corps de conformation étant une tôle de guidage, le long de laquelle on déplace l'accumulation de matière, après avoir été ramenée.

21. Procédé de fabrication d'une bande de roulement pour un pneumatique de véhicule selon les attributs de la revendication 19, le corps de conformation étant un rouleau de formage ou un cylindre de formage le long duquel on déplace l'accumulation de matière, après avoir été ramenée.

22. Procédé de fabrication d'une bande de roulement pour un pneumatique de véhicule selon les attributs de la revendication 19, le corps de conformation étant un anneau de formage, que l'on ramène de façon coaxiale et en direction radiale à l'extérieur de la première couche de caoutchouc vers l'accumulation de matière et on déforme à l'aide d'une butée annulaire (notamment contourée) l'accumulation de matière sur toute la circonférence de la première couche de caoutchouc.

23. Dispositif pour la mise en oeuvre du procédé selon les attributs des revendications 1 à 22,
avec un corps de confection logé en rotation autour d'un axe de rotation, pour la confection de couches de caoutchouc,
avec une liaison d'entraînement pour la mise en rotation (notamment commandée) du corps de confection autour de son axe de rotation,
avec des moyens pour la dépose positionnable (notamment commandée) de matière caoutchoutée sur le corps de confection et avec des moyens de conformation d'accumulations confectionnées de matière caoutchoutée sur le corps de confection.
